# EUROPÄISCHE PATENTSCHRIFT

(11) **EP 2 274 935 B1**
(45) Veröffentlichungstag und Bekanntmachung des Hinweises auf die Patenterteilung: **27.08.2014**
(21) Anmeldenummer: 09741895.8
(22) Anmeldetag: 07.05.2009
(51) Int. Cl.: H04W 40/24, H04W 84/18, H04W 36/08

(54) **VERFAHREN UND VORRICHTUNG ZUM HERSTELLEN VON ZUMINDEST EINER ERWEITERUNG EINER ZUORDNUNGSNACHRICHT FÜR WIRELESS MESH NETZE**
METHOD AND DEVICE FOR CREATING AT LEAST ONE EXPANSION OF AN ASSOCIATION MESSAGE FOR WIRELESS MESH NETWORKS
PROCÉDÉ ET DISPOSITIF DE PRODUCTION D'AU MOINS UNE EXTENSION D'UN MESSAGE D'ATTRIBUTION POUR DES RÉSEAUX MAILLÉS SANS FIL

(30) Priorität: 09.05.2008 DE 102008022917
(43) Veröffentlichungstag der Anmeldung: 19.01.2011
(73) Patentinhaber: Unify GmbH & Co. KG, 81379 München (DE)
(72) Erfinder: BAHR, Michael, 81827 München (DE)
(74) Vertreter: Fritzsche, Thomas
(86) Internationale Anmeldenummer: PCT/EP2009/003271
(87) Internationale Veröffentlichungsnummer: WO 2009/135676

(56) Entgegenhaltungen:
- RONGSHENG HUANG ET AL: "A Mobility Management Scheme for Wireless Mesh Networks" GLOBAL TELECOMMUNICATIONS CONFERENCE, 2007. GLOBECOM '07. IEEE, IEEE, PISCATAWAY, NJ, USA, 1. November 2007 (2007-11-01), Seiten 5092-5096, XP031196893 ISBN: 978-1-4244-1042-2
- 802.11 WORKING GROUP OF THE IEEE 802 COMMITTEE: "IEEE P802.11s/D2.0 Draft STANDARD for Information Technology - Telecommunications and information exchange between systems - Local and metropolitan area networks - Specific requirements - Part 11: Wireless LAN Medium Access Control (MAC) and Physical Layer (PHY) specifications" IEEE, PISCATAWAY, NJ, USA, 21. März 2008 (2008-03-21), Seiten 1-263, XP040429893 in der Anmeldung erwähnt

## Beschreibung

Die Erfindung betrifft ein Verfahren und eine Vorrichtung zum Erstellen von zumindest einer Erweiterung einer Zuordnungsnachricht für Wireless Mesh Netze.

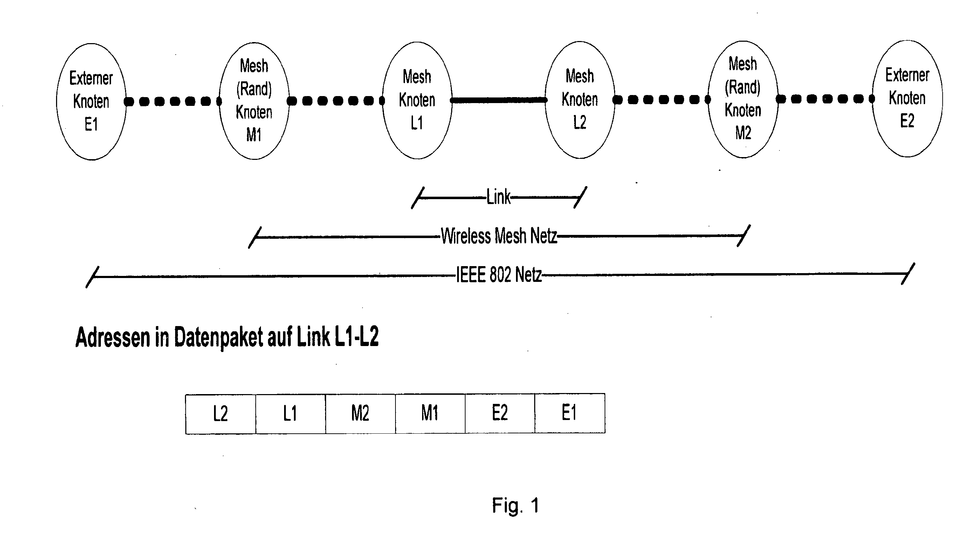

WO 2008/122674 A2 offenbart ein Verfahren zum Betreiben eines nach Art des Mesh, insbesondere gemäß dem Standard IEEE 802.11s, aus einer Vielzahl von Netzwerkknoten gebildeten Netzwerks. Hieraus ist bekannt, sechs Adressen in den Datenpaketen zu verwenden. Hierbei werden, wie in Fig. 1 zu erkennen ist, die 5. und 6. Adresse E1 und E2 verwendet, um die MAC Adressen von Quellen- und Senkenknoten zu speichern, die außerhalb des WLAN-Mesh-Netzes sind. Die MAC-Adressen bestehen vorzugsweise aus sechs Oktetts, die wiederum aus acht Bits bestehen.

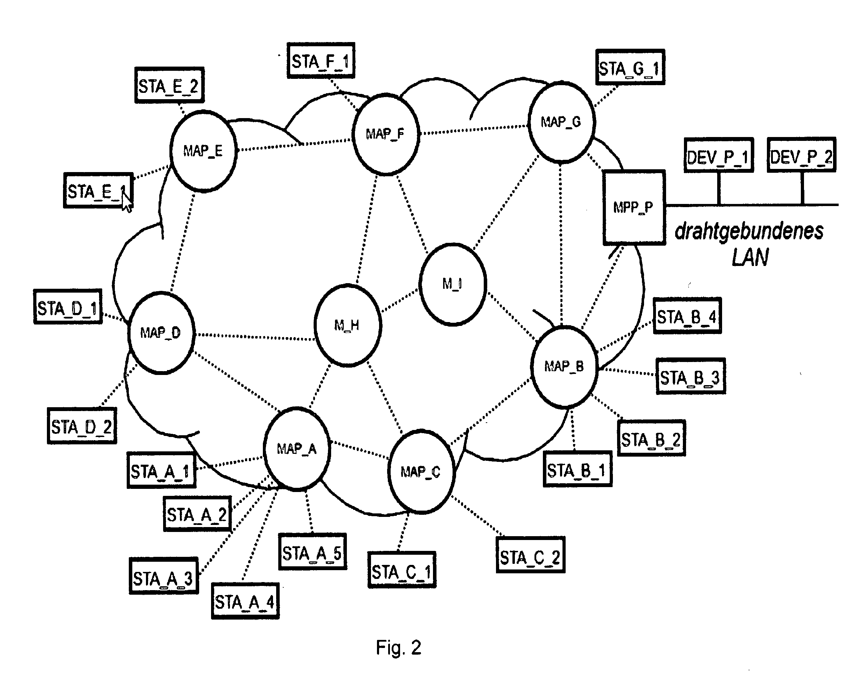

In diesem Zusammenhang wurden Verfahren vorgeschlagen, wie bei einer Pfadberechnung im Standard-Routing-Protokoll von IEEE 802.11s, "Hybrid Wireless Mesh Protocol (HWMP)", die Verbindung zwischen externen Knoten, also Netz-Knoten, die keine Mesh-Knoten und sich deshalb außerhalb des Mesh-Netzes befinden, und den entsprechenden Mesh-Randknoten, an welche diese externen Knoten angrenzen, übermittelt werden kann. Diese Verfahren sind allerdings nur für langlebige Abbildungen (Zuordnungen) zwischen den externen Knoten und den Mesh-Randknoten geeignet. Insbesondere eine Mobilität von Stationen STA_A_1 bis STA_A_5. STA,_B_1 bis STA_B_4, STA_C_1 bis STA_C_2, STA_D_1 bis STA_D_2, STA_E_1 bis STA_E_2, STA_F_1 und STA_G_1. die entsprechend mit Mesh-Zugangspunkten MAP_A, MAP_B bis MAP_G verbunden sind, jedoch von einem Mesh-Zugangspunkt zum nächsten wechseln können, wie es in Fig. 2 durch die mobile Station STA_A_1 bis STA_G_1 an den Mesh-Zugangspunkten MAP-A bis MAP_G angedeutet ist, wird nur unzureichend unterstützt.

Das vorgeschlagene "Radio-aware Optimized Link State Routing (RA-OLSR) "-Protokoll, welches ein optionales, proaktives Routing-Protokoll des IEEE 802.11s-Draft-Standard [D1.06, Abschnitt 11A.9] ist, verwendet einen proaktiven Mechanismus, um alle Zuordnungen zwischen Stationen und Mesh-Zugangspunkten allen anderen Mesh-Knoten bekannt zu machen. Jeder Mesh-Zugangspunkt hat eine als sogenannte "local association base" (LAB) bekannte lokale Datenbasis, die alle mit diesem Mesh-Zugangspunkt assoziierten Stationen enthält. Der Inhalt dieser lokalen Datenbasis wird periodisch an alle Knoten im Mesh-Netz mittels so genannter "local association base announcement" (LABA) -Nachrichten gesendet. Diese speichern die Daten aus den erhaltenen Nachrichten in ihrer so genannten "global association base" (GAB) globalen Datenbasis und wissen damit, zu welchem Mesh-Zugangspunkt an bestimmte Stationen gerichtete Datenpakete weitergeleitet werden müssen.

Wechselt eine Station von einem Mesh-Zugangspunkt zu einem anderen, so werden spätestens mit der nächsten, periodischen LABA-Nachricht die Änderungen im RA-OLSR-Mesh-Netz bekannt gemacht. Mit Blick auf die Darstellung in Figur 2 heißt das, dass die LABA-Nachricht des alten Mesh-Zugangspunktes der mobilen Station nicht mehr die Adresse der mobilen Station enthalt und dass die LABA-Nachricht des neuen Mesh-Zugangspunktes der mobilen Station jetzt die Adresse der mobilen Station enthalt.

Der derzeitig in der Entwicklung befindliche Standard IEEE 802.11s WLAN Mesh Networking in der Version "IEEE P802.11s™/D2.0 Draft STANDARD for Information Technology -Telecommunications and information exchange between systems - Local and metropolitan area network - Specific requirements, Part 11: Wireless LAN Medium Access Control (MAC) and Physical Layer (PHY) specifications, Amendment <number>: Mesh Networking". März 2008, Seiten I-XVII und 1-242 - nachstehend IEEE P802.11 s/D2.0 Draft-Standard genannt - beschreibt in Abschnitt "11B.7.5 Proxy protocol" (Seiten 180-181) auch Elemente für ein sogenanntes Proxy-Protokoll. Diese beiden Proxy-Protokoll-Nachrichten, die sogenannte Proxy-Update-Nachricht (oder Zuordnungsnachricht) und die Proxy-Update-Confirmation-Nachricht (oder Zuordnungsbestätigungsnachricht) sollen allgemeine Mittel für die beliebige Verteilung von Proxy-Informationen (oder Zuordnungsinformationen) in einem Wireless Mesh Netz zur Verfügung stellen.

Eine Zuordnung umfasst einen externen Knoten und einen Mesh-Knoten. Dieser Mesh-Knoten wird Proxy Mesh Point oder Proxy MP genannt und ist der Mesh-Knoten, an dem Datenpakete des externen Knotens in das Wireless Mesh Netz gelangen (Ingress Proxy MP) oder Datenpakete, die an den externen Knoten adressiert sind, das Wireless-Mesh-Netz verlassen (Egress Proxy MP). Insbesonde-re muss der Ingress Proxy MP wissen, zu welchen Egress Proxy MP die Datenpakete weitergeleitet werden müssen.

Die Zuordnungsnachrichten in IEEE 802.11s sind als eigenständige Nachrichten definiert, die von beliebigen Routing-Protokollen benutzt werden können. Dabei liegt es in der Verantwortung des Routing-Protokolls, wann und wie Zuordnungsnachrichten verwendet werden, da die Zuordnungen Teil der Routen sind.

In WO 2008/122674 A2 ist ein Mesh-Netz offenbart, an dem in Verbindung mit der aus WO 2008/122674 A2 bekannten Fig. 3 nachstehend die Wirkungsweise eines solchen Mesh-Netzes erläutert wird. In diesem Netz sind nur die für die Erläuterung notwendigen Mesh-Randknoten, also ein erster Mesh-Randknoten M1, ein zweiter Mesh-Randknoten M2, ein dritter Mesh-Randknoten M3 sowie ein vierter Mesh-Randknoten M4 dargestellt. Das Mesh-Netz kann sogar weitaus mehr Mesh-Knoten enthalten als dargestellt sind. Pfade zwischen zwei dargestellten Mesh-Randknoten können über mehrere Mesh-Knoten gehen. Ebenso sind zur Wahrung der Übersichtlichkeit nur ein externer Quellenknoten S1 und ein externer Senkenknoten D1 als Auszug von der in der Regel Vielzahl von externen Knoten angegeben und dargestellt. Zwischen ihnen und den entsprechenden Mesh-Randknoten M1...M4 können sich noch zudem ebenfalls weitere Knoten befinden.

Für das dargestellte Mesh-Netz sei definiert, dass mit "externe Knoten" diejenigen Netz-Knoten bezeichnet sind, die keine Mesh-Knoten und deshalb außerhalb des Mesh-Netzes sind.

Ferner wird mit "Mesh-Randknoten" ein Mesh-Knoten bezeichnet, der neben den Verbindungen zu anderen Mesh-Knoten auch eine Verbindung zu Knoten hat, die nicht zum Mesh-Netz gehören. Das können im Kontext des IEEE 802.11s "Mesh-Zugangspunkte" sein, mit denen sich normale WLAN-Stationen (Nutzerknoten) verbinden können, um über das Mesh-Netz zu kommunizieren, oder so genannte "Mesh-Portale" sein, die eine Verbindung zu anderen Netzen, wie zum Beispiel einem drahtgebundenen Ethernet, haben.

Ein Mesh-Randknoten, über den ein externer Quellenknoten mit dem Mesh-Netz verbunden ist, wird auch als Mesh-Quellenknoten bezeichnet. Ein Mesh-Randknoten, über den ein externer Senkenknoten mit dem Mesh-Netz verbunden ist, wird auch als Mesh-Senkenknoten bezeichnet.

Im Kontext des Ausführungsbeispiels sind "Zuordnungstabellen" derart definiert, dass sie die Zuordnungen zwischen Mesh-Randknoten und externen Knoten enthalten. Ein Eintrag in der Zuordnungstabelle beschreibt, über welchen Mesh-Randknoten der angegebene externe Knoten aus dem Mesh-Netz heraus erreicht werden kann. Dabei kann die Zuordnungstabelle zum Einen in einen "lokalen Teil der Zuordnungstabelle", welcher alle Zuordnungen dieses Mesh-Knotens enthält, wobei der Mesh-Knoten über ein externes Interface, ein so genanntes "non-mesh Interface", den externen Knoten erreichen kann und nur Mesh-Randknoten einen lokalen Teil aufweisen, und zum Anderen einen "globalen Teil der Zuordnungstabelle" aufgeteilt werden, der alle bekannten Zuordnungen anderer Mesh-Knoten enthält, wobei der betreffende Mesh-Knoten über den angegebenen Mesh-Randknoten den externen Knoten erreichen kann und jeder Mesh-Knoten einen globalen Teil haben kann.

Ferner können lokaler und globaler Teil der Zuordnungstabelle als zwei separate Tabellen oder auch als eine gemeinsame Tabelle implementiert werden. Dabei gilt, dass jeder Mesh-Knoten eine Zuordnungstabelle hat. Der Tabellenindex der Zuordnungstabelle ist der externe Knoten: Mesh-Knoten suchen den passenden Mesh-Randknoten für einen gegebenen externen Knoten.

Es sei ferner definiert, dass "Zuordnungsnachrichten" Nachrichten sind mit denen Zuordnungen anderen Mesh-Knoten im Mesh-Netz bekannt gemacht werden. Als externer Quellenknoten S1, der gemäß Darstellung über den ersten Mesh-Randknoten MI Datenpakete in das Mesh-Netz senden kann, kann als eine gemäß dem Wireless Local Area Network zugrundeliegenden Standard IEEE 802.11 oder seinen Derivaten ausgestaltete Station sein, während der erste Mesh-Randknoten MI als ein Mesh-Zugangspunkt fungieren kann.

Der externe Senkenknoten D1, kann gemäß Darstellung in Fig. 3 über einen dritten Mesh-Randknoten M3 Datenpakete aus dem Mesh-Netz erhalten. In einem realen Mesh-Netz kann D1 z.B. ein Knoten in einem drahtgebundenen Ethernet und M3 ein Mesh-Portal sein. In dem in Figur 3 dargestellten Mesh-Netz existiert genau ein Pfad, und zwar zwischen dem ersten Mesh-Randknoten M1 und dem dritten Randknoten M3. Dieser Pfad wurde für die Kommunikation zwischen dem externen Quellenknoten S1 und dem externen Senkenknoten D1 aufgebaut. In Figur 3 sind des weiteren Routing-Tabellen und Zuordnungstabellen angegeben, die sich in dem Beispiel gemäß den Annahmen ergeben bzw. angenommen werden.

Beim Wechsel eines externen Knotens S1 oder D1 zu einem anderen Mesh-Randknoten M1...M4 muss berücksichtigt werden, dass die Kommunikation oft bidirektional ist. Das heißt entsprechend dem Beispiel in Figur 3, dass der Quellenknoten S1 für die (unidirektionale) vom Quellenknoten S1 zum Senkenknoten D1 gerichtete Kommunikation funktional der Quellenknoten und der Senkenknoten D1 funktional der Senkenknoten ist, und für die (unidirektionale) vom Senkenknoten D1 zum Quellenknoten S1 gerichtete Kommunikation der Quellen knoten S1 funktional der Senkenknoten ist und der Senkenknoten D1 funktional als Quellenknoten gilt.

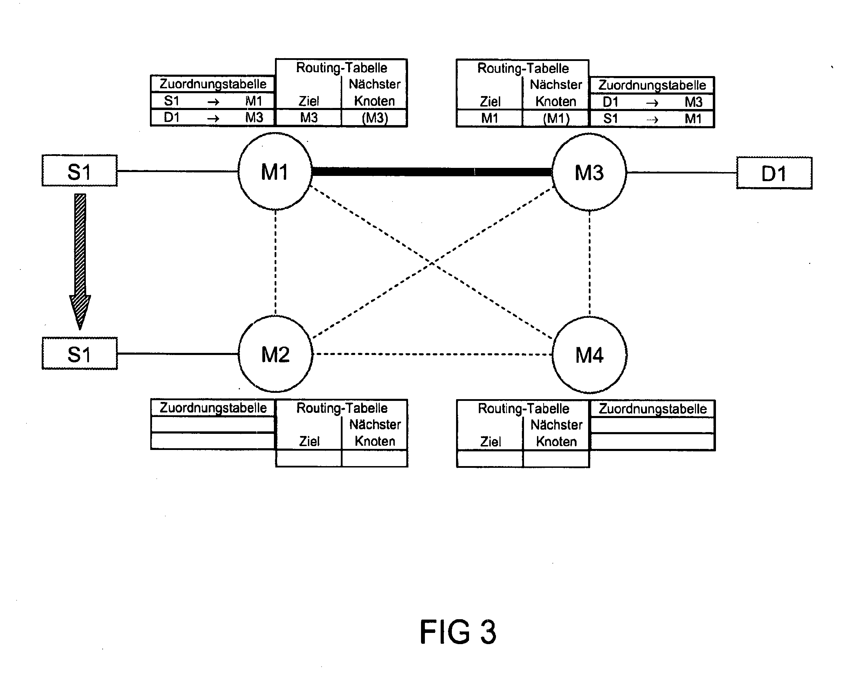

Der Aufbau der in WO 2008/122674 A1 als Fig. 3 gezeigten Zuordnungstabellen sowie Definitionen werden im Folgenden näher erläutert, wobei diese Figur als Fig. 3 dieser Anmeldung beigefügt ist.

Als Mindestanforderung an die Zuordnungstabelle bezüglich der vorhandenen Spalten sind die folgenden Informationstypen als Spalten vorgesehen:
- Adresse externer Knoten (Schlüsselspalte)
- Adresse dazugehöriger Mesh-Randknoten
- Timeout / verbleibende Gültigkeitszeit der Zuordnung

Ferner ist die Zuordnungstabelle um die folgende Spalte erweitert:
- Informationstyp "inaktiv/aktiv", mit den beiden Werten
- inaktiv: Die Zuordnung wird zur Zeit nicht für die Weiterleitung von Datenpaketen verwendet. Es kann sein, dass kein Pfad zu dem entsprechenden Mesh-Randknoten M1...M4 vorhanden ist.
- aktiv: Die Zuordnung wird momentan für die Weiterleitung von Datenpaketen verwendet. Es existiert ein Pfad zu dem entsprechenden Mesh-Randknoten M1...M4.

Kommt ein Datenpaket für einen oder von einem externen Knoten beim Mesh-Randknoten M1...M4 an, so werden die Spalte "inaktiv/aktiv" des entsprechenden Eintrags in der Zuordnungstabelle mit einem die Information "aktiv" wiedergebenden, insbesondere codierten Wert, besetzt und der Timeout auf seinen Startwert gesetzt. Läuft der Timer ab, d.h. es wurde für eine bestimmte Zeit kein Paket vom Mesh-Randknoten an den entsprechenden externen Knoten weitergeleitet bzw. von ihm empfangen, wird die Spalte "inaktiv/aktiv" mit einem die Information "inaktiv" wiedergebenden, insbesondere codierten Wert, besetzt.

Da die Zuordnungen eigentlich Teile des Pfades sind, sollte der Startwert des Timers einer Zuordnung dem Timeout des dazugehörigen Pfades im Mesh-Netz entsprechen.

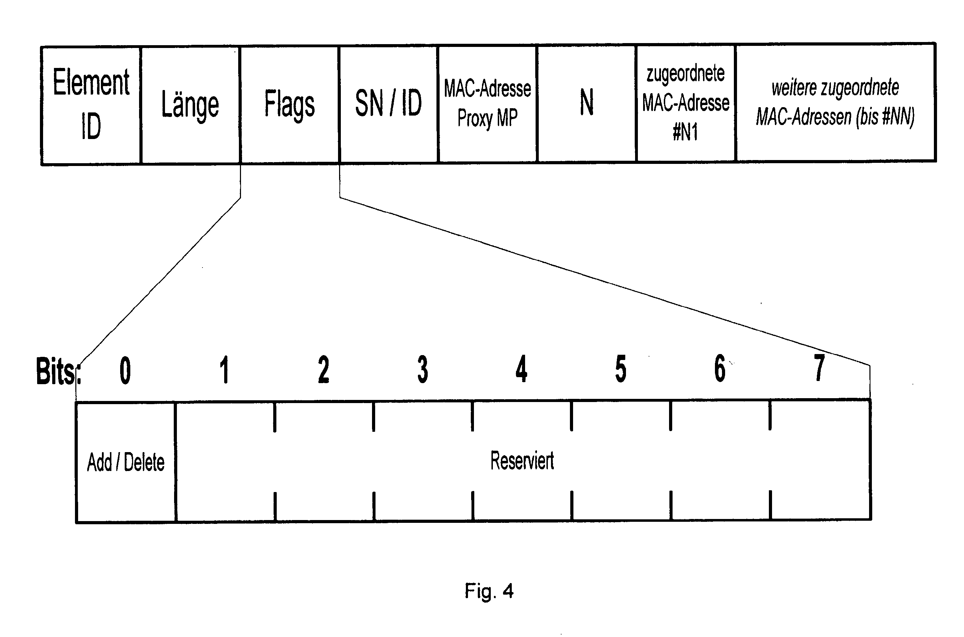

Die im IEEE P802.11s/D2.0 Draft-Standard im Abschnitt "7.3.2.99 Proxy Update (PU) information element" (Seiten 42-43) vorgestellte Zuordnungsnachricht, wie in Fig. 4 gezeigt, bietet nur eingeschränkte Möglichkeiten, Zuordnungsinformationen an andere Mesh-Knoten weiterzuleiten. Insbesondere erlaubt sie nicht, dass der Quellknoten eine Gültigkeitsdauer für die Zuordnungen setzen kann. Außerdem bietet die Zuordnungsnachricht nur eingeschränkte Unterstützung für Sequenznummern, die für das Erkennen veralteter Zuordnungsinformationen wichtig sind. Die in der Zuordnungsnachricht enthaltene Sequenznummer SN kann dafür zwar benutzt werden, ist aber eigentlich nur als eindeutiger Identifikator ID einer Zuordnungsnachricht gedacht, damit die entsprechenden Zuordnungsbestätigungsnachrichten korrekt zugeordnet werden können.

Fig. 4 zeigt eine Zuordnungsnachricht (Proxy Update) aus IEEE P802.11s/D2.0 Draft-Standard, Abschnitt 7.3.2.99), wobei SN / ID die Sequenznummer der Zuordnungsnachricht und N die Anzahl der zugeordneten MAC-Adressen bedeuten. ID ist eine Abkürzung für Identifikator. Das Add/Delete-Flag legt fest, ob die enthaltene Zuordnungsinformation hinzugefügt (add, Wert 0) oder gelöscht (dele-te, Wert 1) werden soll.

Die Definition des Proxy-Update-Elements im IEEE P802.11s/D2.0 Draft-Standard, Abschnitt 7.3.2.99, siehe die Zuordnungsnachricht in Fig. 4, bietet
- Unterstützung von Verteilung von Zuordnungsinformationen entsprechend ei-nes Hard-State-Verfahrens, das bedeutet, die Zuordnungsinformation wird explizit durch eine Nachricht gesetzt und muss auch explizit durch einer Nachricht gelöscht werden.
- Nur bedingte Unterstützung von Verteilung von Zuordnungsinformationen entsprechend eines Soft-State-Verfahrens, das bedeutet, die Zuordnungsinformation wird zwar explizit durch eine Nachricht gesetzt, wird aber implizit nach einer gewissen Lebensdauer gelöscht, wenn sie bis dahin nicht erneuert wurde. Der Wert für die Lebensdauer muss durch den Empfänger der Zuordnungsnachricht bestimmt werden. Der Sender der Zuordnungsnachricht kann keinen Wert für die Lebensdauer vorgeben. Eine Festlegung der Gültigkeitsdauer durch die Quelle der Zuordnungsnachricht ist nicht möglich.
- Das Proxy-Update-Element enthält eine Sequenznummer, die allerdings nur als Identifikator der Zuordnungsnachricht dient, damit erhaltene Zuordnungsbestätigungsnachrichten den entsprechenden Zuordnungsnachrichten zugeordnet werden können.

Die Local Association Base Announcement (LABA) Nachricht des Routing-Protokolles RA-OLSR, das zuletzt in der früheren Version "IEEE P802.11s™/D1.06 Draft STANDARD for Information Technology - Telecommunications and information exchange between systems - Local and metropolitan area networks - Specific requirements, Part 11: Wireless LAN Medium Access Control (MAC) and Physical Layer (PHY) specifications, Amendment <number>: Mesh Networking". Juli 2007, Seiten I-XVII, 1-246 - nachstehend IEEE P802.11s/D1.06 Draft-Standard genannt, in Abschnitt 7.3.2.79 (Seiten 4647) enthalten war, enthält die Adresse eines Mesh-Zugangspunktes (Proxy MP) und für mit ihm assoziierte Endgeräte jeweils Adresse und Sequenznummer.

Die Verteilung einer größeren Vielfalt an Zuordnungsinformationen kann auch über das Verschicken mehrerer Zuordnungsnachrichten erreicht werden, falls diese nur eingeschränkte Konfigurationsmöglichkeiten bieten. Allerdings dürfen diese Konfigurationsmöglichkeiten nicht zu gering sein. Das Versenden mehrerer Zuordnungsnachrichten führt aber auch zu einem höheren Kommunikations-Overhead durch den mehrfachen Zugriff auf die Luftschnittstelle im Gegensatz zu einer einzigen Zuordnungsnachricht.

In der Druckschrift "RONGSHENG HUANG ET AL: "A Mobility Management Scheme for Wireless Mesh Networks. GLOBAL TELECOMMUNICATIONS CONFERENCE, 2007. GLOBECOM '07. IEEE, IEEE PISCATAWAY, NJ, USA, 1. November 2007 (2007-11-01), Seiten 5092-5096, XP031196893, ISBN: 978-1-4244-1042-2" ist ein Verfahren zum Betreiben eines Mesh-Netzes gemäß Oberbegriff des Anspruches 1 offenbart.

Die Erfindung hat sich zur Aufgabe gestellt, ein Verfahren und eine Vorrichtung zum Erstellen von zumindest einer Erweiterung einer Zuordnungsnachricht für Wireless-Mesh-Netze anzugeben, bei der beliebige Routing-Protokolle verwendet werden können.

Die Aufgabe wird gelöst durch das Verfahren nach Anspruch 1 zum Betreiben eines nach Art des Mesh, insbesondere gemäß dem Standard IEEE 802.11s, aus einer Vielzahl von Netzwerkknoten gebildeten Netzwerks und durch eine entsprechend Vorrichtung zur Durchführung dieses Verfahrens nach Anspruch 12.

Das erfindungsgemäße Verfahren zum Betreiben eines Mesh-Netzes, insbesondere gemäß dem Standard IEEE 802.11 s, weist folgende Eigenschaften auf:
a) das Mesh-Netz wird aus einer Vielzahl von Netzknoten gebildet, die außenliegende Randknoten (M1,M2, M3, M4; MAP_A. MAP_B, ..., MAP_G) und innen liegende Netzknoten (L1, L2; M_H, M_I) umfassen,
b) zumindest ein erster Randknoten (MAP_A) bildet einen Anschlusspunkt für zu dem Netz disjunkte erste Stationen (STA_A_1, STA_A_2. STA_A_3, STA_A_4, STA_A_5) und zumindest ein zweiter Randknoten (MAP_B) bildet einen Anschlusspunkt für zu dem Netz disjunkte zweite Stationen (STA_B_1, STA_B_2, STA_B_3, STA_B 4), wobei die ersten und zweiten Stationen in Bezug auf das Mesh-Netz somit externe Stationen sind,
c) zwischen den zu dem Netz disjunkten ersten und zweiten Stationen sollen Datenpakete ausgetauscht werden und
d) bei einem Wechsel einer disjunkten Station von einem Randknoten zu einem anderen Randknoten, insbesondere von einem Funkversorgungsbereich des ersten Randknotens (MAP_A) zum Funkversorgungsbereich des zweiten Netzknotens (MAP_B), erfolgt eine Aktualisierung der jeweiligen Zuordnungsinformation der Netzknoten mittels einer Zuordnungsnachricht unter Einfügung einer Gültigkeitsdauer für die Zuordnung der an den Randknoten (MAP_A bis MAP_G) jeweils angeschlossenen disjunkten Stationen,
e) wobei die Gültigkeitsdauer durch einzelne Bits eines Flags-Feldes bestimmt wird, wobei wahlweise sowohl eine Hard-State-Zuordnung, bei der die Zuordnungsinformation jeweils explizit gelöscht wird, als auch eine Soft-State-Zuordnung gewählt werden kann, bei der entweder die Quelle oder das Ziel der Zuordnungsnachricht die Gültigkeitsdauer bestimmt.

Die Erfindung umfasst unter Anderem ein derartiges Verfahren und eine entsprechende Vorrichtung zum Erstellen von zumindest einer Erweiterung der Zuordnungsnachricht und deren Konfiguration, wodurch eine generische Verwendung der Zuordnungsnachricht durch beliebige Routing-Protokolle erreicht wird. Die Erfindung beschäftigt sich dabei unter Anderem mit folgenden Erweiterungen der Zuordnungsnachricht:
- einer Gültigkeitsdauer von Zuordnungsinformationen,
- einer Übermittlung von Zuordnungsinformationen beliebiger Proxy MPs,
- Sequenznummern von Zuordnungsinformationen.

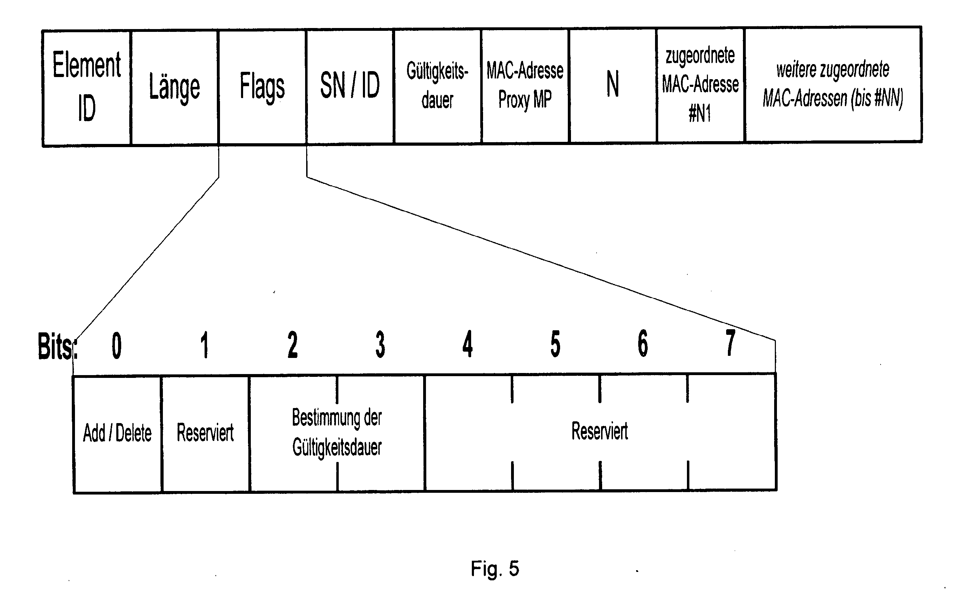

Weitere Einzelheiten und Vorteile der Erfindung werden ausgehend von dem anhand der Fig. 1, 2 und 3 erläuterten Stand der Technik in Verbindung mit den beispielsweise in den Fig. 5 bis 17 gezeigten erfindungsgemäßen Ausführungsformen erläutert, wobei gleiche Bezeichnungen in allen Figuren dieselbe Bedeutung haben.

Es zeigen:
- Fig. 1: ein bekanntes 6-Adress-Schema nach IEEE 802.11s,
- Fig. 2: ein bekanntes Wireless Mesh-Netz mit mobilen externen Stationen, auf das die Erfindung angewendet werden soll,
- Fig. 3: ein in WO 2008/122674 A2 offenbartes Ausführungsbeispiel, bei der die Wirkungsweise der Datenpaketübertragung zwischen externen Stationen erläutert wird, bei der die Erfindung angewandt werden kann,
- Fig. 4:: eine Zuordnungsnachricht (Proxy Update) aus IEEE 802.11s Draft Standard D2.0, Abschnitt 7.3.2.99,
- Fig. 5: eine Zuordnungsnachricht gemäß einer ersten erfindungsgemäßen Ausführungsform, erweitert mit einer Gültigkeitsdauer,
- Fig. 6: eine Zuordnungsnachricht einer zweiten erfindungsgemäßen Ausführungsform, erweitert mit einer Gültigkeitsdauer pro Zuordnung,
- Fig. 7: eine Zuordnungsnachricht einer dritten erfindungsgemäßen Ausführungsform, erweitert für beliebige Zuordnungen,
- Fig. 8: eine Zuordnungsnachricht einer vierten erfindungsgemäßen Ausführungsform, erweitert für beliebige Zuordnungen mit zwei unterschiedlichen Darstellungsbereichen der Zuordnungen,
- Fig. 9: eine Zuordnungsnachricht einer fünften erfindungsgemäßen Ausführungsform, erweitert für beliebige Zuordnungen mit zwei unterschiedlichen Darstellungsbereichen der Zuordnungen, deren Vorhandensein separat gesteuert wird,
- Fig. 10: eine Zuordnungsnachricht einer sechsten erfindungsgemäßen Ausführungsform, erweitert mit separatem Flags-Feld für immer vorhandene zwei Darstellungsbereiche von Zuordnungen,
- Fig. 11: eine Zuordnungsnachricht einer siebten erfindungsgemäßen Ausführungsform, erweitert mit separatem Flags-Feld für beliebige Zuordnungen mit zwei unterschiedlichen Darstellungsbereichen der Zuordnungen, deren Vorhandensein separat gesteuert wird,
- Fig. 12: eine Zuordnungsnachricht einer achten erfindungsgemäßen Ausführungsform, erweitert mit separatem Informationsfeld "add / delete" pro Zuordnung,
- Fig. 13: eine Zuordnungsnachricht einer neunten erfindungsgemäßen Ausführungsform, erweitert mit Sequenznummern der zugeordneten MAC-Adressen,
- Fig. 14: eine Zuordnungsnachricht einer zehnten erfindungsgemäßen Ausführungsform, erweitert mit Sequenznummern für zugeordnete MAC-Adressen mit separater Festlegung der Verfügbarkeit der Sequenznummer SN /ID pro Zuordnung,
- Fig. 15: eine Zuordnungsnachricht als eine elfte erfindungsgemäße Ausführungsform mit einem Maximum an vorgeschlagenen Erweiterungen,
- Fig. 16: eine Zuordnungstabelle des Mesh-Knotens MAP_A als eine zwölfte erfindungsgemäßen Ausführungsform,
- Fig. 17: eine Zuordnungsnachricht einer dreizehnten erfindungsgemäßen Ausführungsform mit gesamter Zuordnungstabelle des Mesh-Knotens MAP_A und
- Fig. 18: eine Zuordnungsnachricht einer vierzehnten erfindungsgemäßen Ausführungsform mit Veränderungen der Zuordnungstabelle des Mesh-Knotens MAP_A.

### Gültigkeitsdauer von Zuordnungsinformationen:

Die Zuordnungsnachricht bzw. Proxy-Update-Nachricht aus IEEE P802.11s/D2.0 Draft-Standard (Abschnitt 7.3.2.99 auf Seite 42) wird dergestalt erweitert, dass sie alle verschiedenen Konfigurationsmöglichkeiten von Zuordnungsinformationen ermöglicht (Hard-State bzw. Soft-State, deren Gültigkeitsdauer bestimmt ist durch die Quelle oder das Ziel).

Der Zuordnungsnachricht werden folgende Felder hinzugefügt:
- Gültigkeitsdauer der Zuordnungsnachricht (kann in einigen Fällen auch weggelassen werden)
- Informationsfeld, welches bestimmt, welches Verfahren für die Bestimmung der Gültigkeit der Zuordnungsinformation verwendet wird:
   1. Hard-State: bis die Zuordnungsinformation explizit gelöscht wird
   2. Soft-State:
      2a. Quelle bestimmt Gültigkeitsdauer
      2b. Ziel bestimmt Gültigkeitsdauer

Ein Beispiel dafür ist in Fig. 5 angegeben, in der eine Zuordnungsnachricht gezeigt ist, die mit einer Gültigkeitsdauer erweitert ist. SN / ID ist die Sequenznummer der Zuordnungsnachricht, wobei die Sequenznummer gleichzeitig den Identifikator ID darstellt, N ist die Anzahl der dem Proxy MP zugeordneten MAC-Adressen. Ein Beispiel für die Realisierung des Informationsfeldes, welches das Verfahren für die Bestimmung der Gültigkeit der Zuordnungsinformation bestimmt, ist die Verwendung der Bits 2 und 3 im vorhandenen Flags-Feld (beispielsweise ein Oktett) der Zuordnungsnachricht mit den Werten:
- Bit 2 = 0: Hard-State, obiges Verfahren 1 (der Wert von Bit 3 spielt keine Rolle)
- Bit 2 = 1: Soft-State, obiges Verfahren 2
   o Bit 3 = 1: Quelle bestimmt Gültigkeitsdauer, obiges Verfahren 2a. Die entsprechende Gültigkeitsdauer ist im Feld Gültigkeitsdauer enthalten.
   o Bit 3 = 0: Ziel bestimmt Gültigkeitsdauer, obiges Verfahren 2b.

Bei den vorgenannten Verfahren 1 und 2b kann das Feld für die Gültigkeitsdauer auch weggelassen werden, um die Anzahl der zu übertragenden Bytes zu verringern. Ist das der Fall, bedeutet der Wert für das Verfahren 2a im Informationsfeld ebenfalls, dass das Feld für die Gültigkeitsdauer mit eingefügt werden muss.

Die Information über das Verfahren für die Bestimmung der Gültigkeit kann auch in dem Wert der Gültigkeitsdauer kodiert sein, so dass kein separates Informationsfeld dafür notwendig ist. Eine mögliche hexadezimale Kodierung wäre z.B.
- 00 für Verfahren 2b
- FF (größtmöglicher Wert) für Verfahren 1
- Zwischen 00 und FF (größtmöglicher Wert) für Verfahren 2a

In einer ersten Ausführung werden die neuen Informationen (Gültigkeitsdauer und Verfahren) nur einmal in die Zuordnungsnachricht eingefügt. Sie gelten dann für alle aufgeführten Zuordnungen gleich. Es kann aber auch sein, dass die einzelnen Zuordnungen unterschiedliche Gültigkeitsdauern haben. Dann müssen die Gültigkeitsdauer der Zuordnung und das Informationsfeld für das Verfahren der Gültigkeit der Zuordnungsinformationen entsprechend der oben beschriebenen Mechanismen für jede Zuordnung separat angegeben werden. Vorteilhafterweise sollte es über ein Informationsfeld möglich sein, festzulegen, ob Gültigkeitsdauer und Informationsfeld für das Verfahren nur einmal für alle Zuordnungen oder für jede Zuordnung separat angegeben werden. Dadurch können im Fall gleicher Werte viele zu übertragende Bytes vermieden werden.

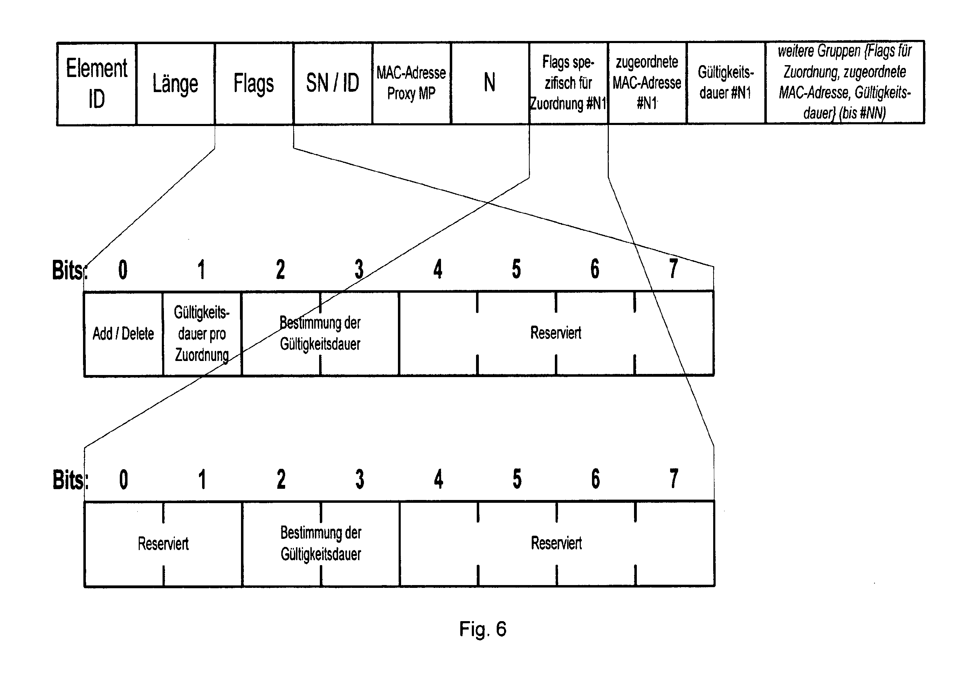

Ein Beispiel für die separate Angabe von Gültigkeitsdauer und Informationsfeld für das Verfahren ist in Fig. 6 angegeben, die eine Zuordnungsnachricht zeigt, die mit einer Gültigkeitsdauer pro Zuordnung erweitert ist. SN / ID ist die Sequenznummer der Zuordnungsnachricht, N ist die Anzahl der Zuordnungen, die jeweils die Felder zuordnungsspezifische Flags, zugeordnete MAC-Adresse und Gültigkeitsdauer haben. Das Bit 1 im Flags-Feld ist so gesetzt, dass sein Wert (z.B. 1) bedeutet, dass die Gültigkeitsdauer pro Zuordnung ist. Aus diesem Grund kann auch das allgemeine Feld für die Gültigkeitsdauer weggelassen werden. Sein Fehlen kann anhand dieses Informationsfeldes erkannt werden.

Die Verwendung der Gültigkeitsdauer ist nur für das Hinzufügen von Zuordnungen sinnvoll. Beim Löschen von Zuordnungen spielt die Gültigkeitsdauer keine Rolle.

### Übermittlung beliebiger Zuordnungen:

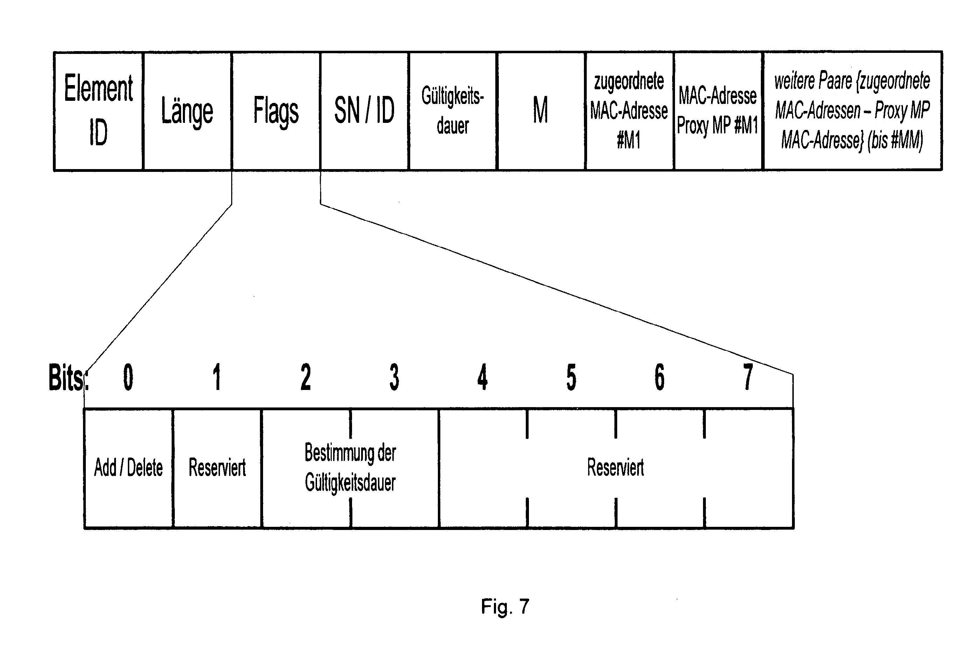

Um beliebige Zuordnungen innerhalb einer Zuordnungsnachricht zu übermitteln, müssen Proxy MP und das entsprechende, zugeordnete Endgerät zusammen angegeben werden. In einem ersten Schritt wird deshalb die Zuordnungsnachricht des IEEE 802.11s Draft 2.0 Standard (siehe Fig. 4) dahingehend erweitert, dass immer die Proxy MP-Adresse und die Adresse des zugeordneten externen Gerätes ("proxied device, proxied MAC address") zusammen angegeben werden. Das Feld M gibt dann die Anzahl der Zuordnungen an. Ein Beispiel dafür ist in Fig. 7 angegeben, die eine Zuordnungsnachricht zeigt, die für beliebige Zuordnungen erweitert ist. SN / ID ist die Sequenznummer der Zuordnungsnachricht.

Einige Proxy MPs können sehr viele zugeordnete Geräte haben, zum Beispiel Mesh-Zugangspunkte mit bis zu 256 assoziierten Endgeräten. In einem solchen Fall kommt die Adresse desselben Proxy MPs sehr oft vor und führt zu einer hohen Anzahl an unnötig übertragenen Bytes. Deshalb wird ferner vorgeschlagen, in der modifizierten Zuordnungsnachricht zwei Bereiche zu haben:
- einen Bereich, in dem ein einziger Proxy MP zusammen mit N zugeordneten Adressen aufgeführt ist, was dem Prinzip der derzeitigen Zuordnungsnachricht aus IEEE 802.11s Draft 2.0 Standard entspricht, und
- einen Bereich, in dem M komplette Zuordnungen, bestehend aus Proxy MP und zugeordneten externem Gerät, angegeben sind.

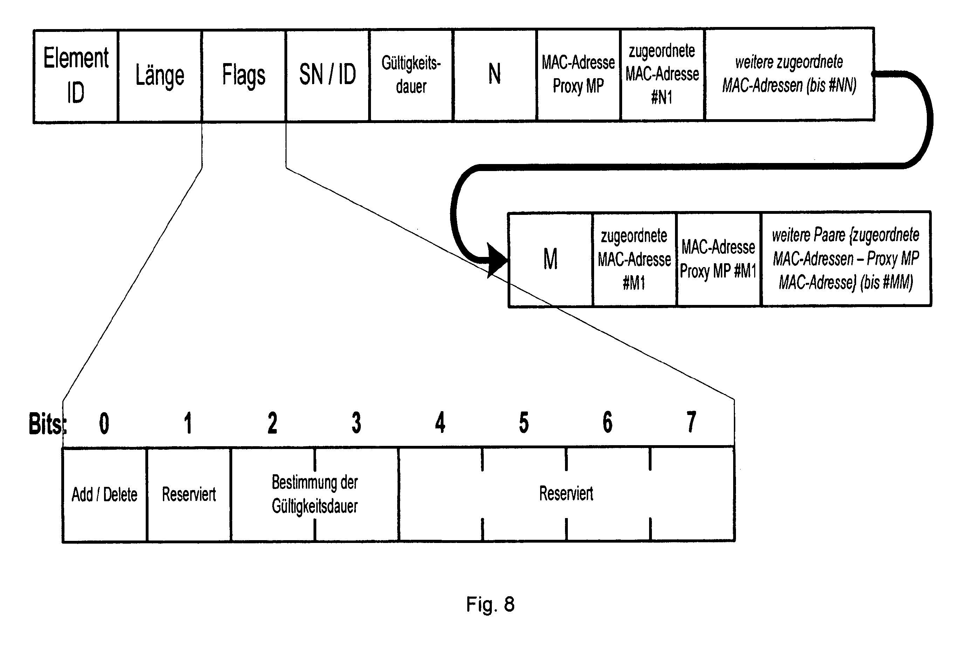

Falls ein Bereich keine Zuordnungen enthält, wird die entsprechende Anzahl N oder M einfach auf 0 gesetzt. Von dem Wert N kann auch die Existenz des Feldes für die Proxy MP Adresse im ersten Bereich abhängig gemacht werden, um weitere zu übertragende Bytes einzusparen. Allerdings muss dann die Proxy MP Adresse der Anzahl der zugeordneten Adressen folgen. Ein Beispiel dafür ist in Fig. 8 angegeben, die eine Zuordnungsnachricht zeigt, die für beliebige Zuordnungen mit zwei unterschiedlichen Darstellungsbereichen der Zuordnungen erweitert ist.

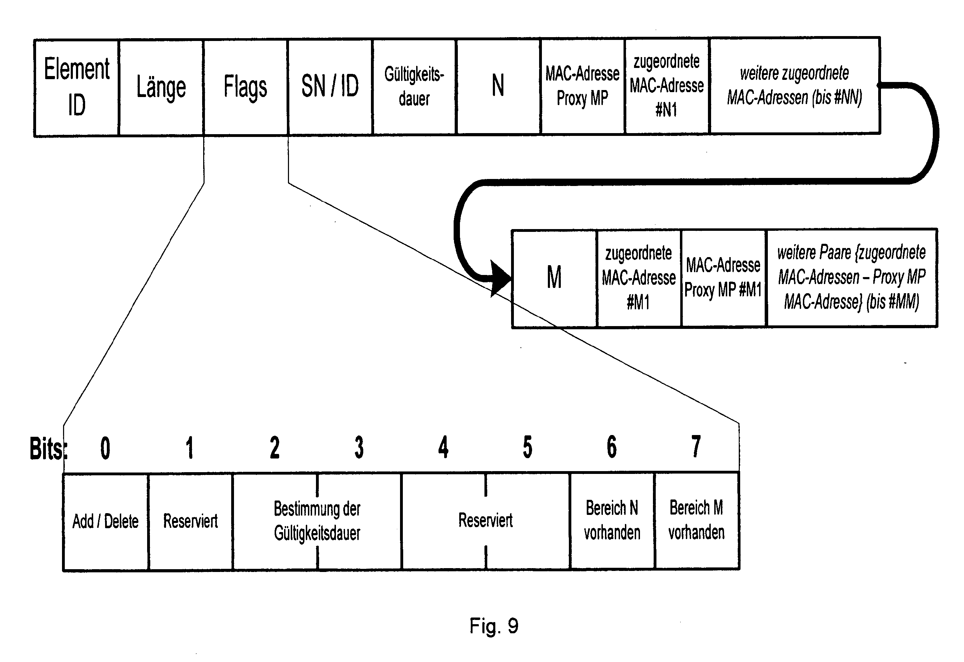

In einer weiteren vorteilhaften Ausführung kann das Vorhandensein der Bereiche über Informationselemente gesteuert werden. Allerdings muss dann eindeutig festgelegt sein, in welcher Reihenfolge die Bereiche auftreten. Ein Beispiel dafür ist in Fig. 9 angegeben, die eine Zuordnungsnachricht zeigt, die für beliebige Zuordnungen erweitert ist mit zwei unterschiedlichen Darstellungsbereichen der Zuordnungen, deren Vorhandensein separat gesteuert wird.

Ein entsprechend gesetztes Bit 6, z.B. auf den Wert 1, zeigt an, dass der erste Bereich, in dem genau ein Proxy MP mit mehreren zugeordneten Adressen angegeben ist, vorhanden ist. Dieser Bereich umfasst das Feld N mit der Anzahl der zugeordneten Adressen, die MAC-Adresse des Proxy MPs sowie die N zugeordneten MAC-Adressen. Ein entsprechend gesetztes Bit 7, z.B. auf den Wert 1, zeigt an, dass der zweite Bereich, in dem komplette Zuordnungen angegeben sind, vorhanden ist. Dieser Bereich umfasst das Feld M mit der Anzahl der Zuordnungen sowie die M Paare von zugeordneter MAC-Adresse und Proxy MP MAC-Adresse.

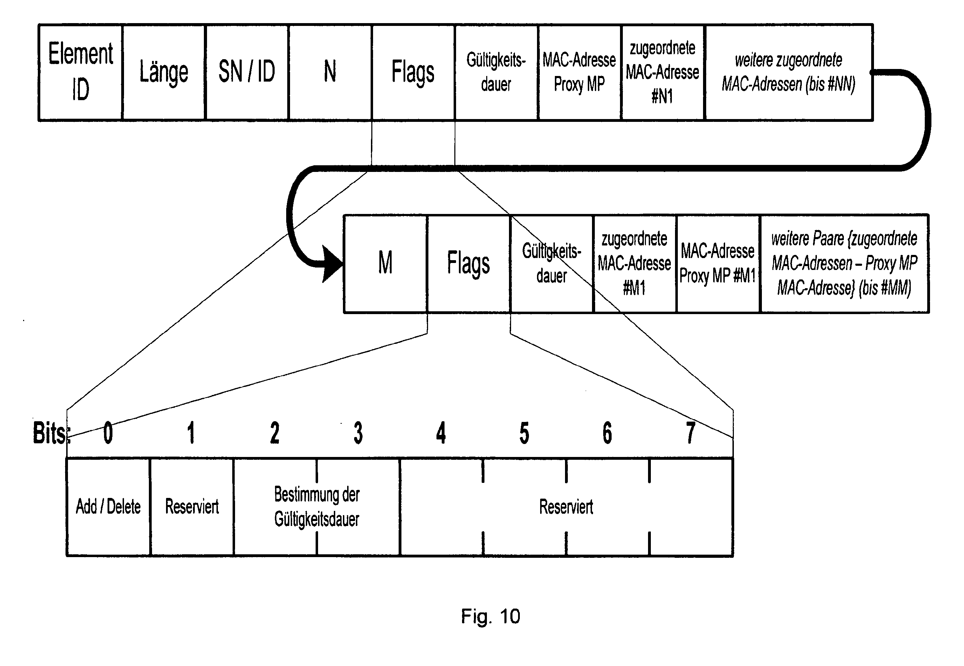

Eine vorteilhafte Erweiterung ist, jeweils ein separates Flags-Feld den beiden Bereichen N und M zuzuordnen. In dem in Fig. 8 dargestellten Fall, in dem immer beide Bereiche vorhanden sind, können dadurch das Flags-Feld und andere Felder, die für alle Zuordnungen Informationen enthalten, weggelassen werden, da sie ja in den Bereichen N und M jeweils vorhanden sind. Ist in einem Bereich die Anzahl der Zuordnungen gleich 0, braucht auch das entsprechende Flags-Feld nicht mit angegeben werden. Ein entsprechendes Beispiel für die Struktur einer solchen Zuordnungsnachricht ist in Fig. 10 angegeben, die eine Zuordnungsnachricht zeigt, die mit separatem Flags-Feld für immer vorhandene zwei Darstellungsbereiche von Zuordnungen erweitert ist.

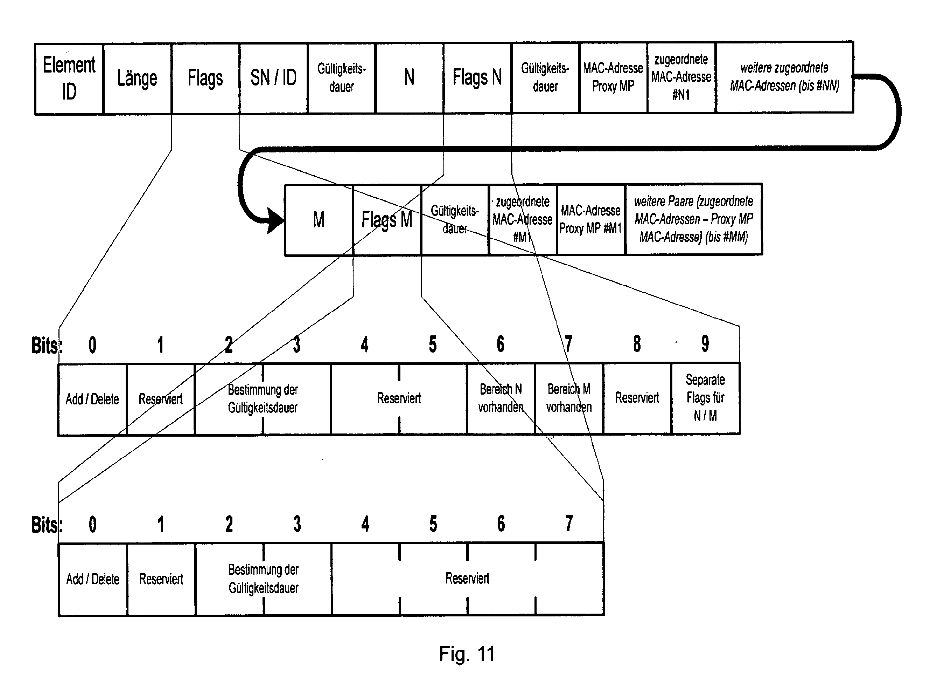

In dem in Fig. 9 dargestellten Fall, in dem das Vorhandensein der Bereiche N und M über entsprechende Informationsfelder gesteuert wird, muss das globale Flags-Feld aufgrund dieser Informationsfelder immer vorhanden sein. In dieser Variante kann über ein zusätzliches Informationsfeld im globalen Flags-Feld gesteuert werden, ob die Informationen für die Zuordnungen aus dem globalen Flags-Feld genommen werden, also für alle Zuordnungen, insbesondere die beiden Bereiche N und M, gleich sind, oder ob die beiden Bereiche N und M jeweils separate Flags-Felder haben. Ein entsprechendes Beispiel für die Struktur einer solchen Zuordnungsnachricht ist in Fig. 11 angegeben, die mit separatem Flags-Feld für beliebige Zuordnungen mit zwei unterschiedlichen Darstellungsbereichen der Zuordnungen erweitert ist, deren Vorhandensein separat gesteuert wird Ein entsprechend gesetztes Bit 9 im allgemeinen Flags-Feld, z.B. auf den Wert 1, bedeutet, dass die beiden Bereiche N und M ihr eigenes Flags-Feld haben, welches die Konfiguration der Zuordnungsinformation im entsprechenden Bereich bestimmen. Die Konfigurationsinformation für die Zuordnungsinformation im allgemeinen Flags-Feld wird nicht ausgewertet.

Eine weitere vorteilhafte Erweiterung ist ein Informationsfeld, welches steuert, ob das Informationsfeld "add/delete" für alle Zuordnungen gilt, oder ob es für jede Zuordnung ein separates Informationsfeld "add/delete" gibt. Letzteres würde es erlauben, mit einer Zuordnungsnachricht Zuordnungsinformationen hinzuzufügen und zu löschen. Im ersten Fall müssten dafür zwei Zuordnungsnachrichten gesendet werden. Hinzufügen und Löschen von Zuordnungen mit einer Zuordnungsnachricht vermeidet Probleme, die aus dem Verlust entweder der Hinzufügen- oder der Löschen-Zuordnungsnachricht entstehen.

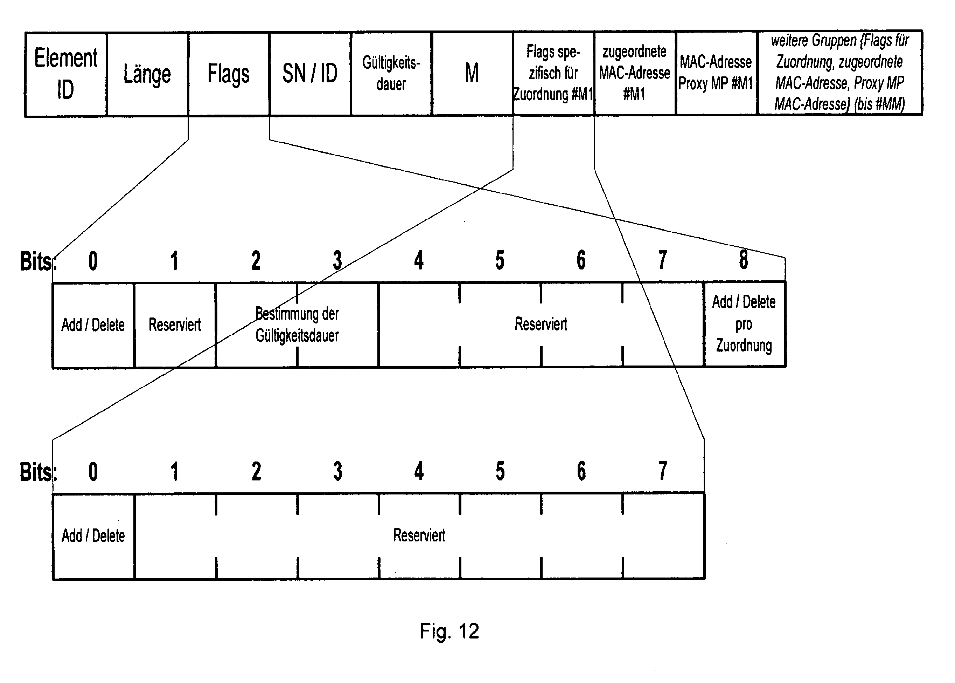

Ein Beispiel für eine Zuordnungsnachricht mit separatem Informationsfeld "add/delete" für jede Zuordnung ist in Fig. 12 angegeben. Es basiert auf der in Fig. 7 gezeigten Zuordnungsnachricht. Fig. 12 zeigt eine Zuordnungsnachricht, die mit separatem Informationsfeld "add / delete" pro Zuordnung erweitert ist.

### Sequenznummern:

Sind die Sequenznummern nur dem Proxy-MP zugeordnet, so kann die zeitliche Abfolge nur solange erkannt werden, wie sich der Proxy MP für ein zugeordnetes Gerät nicht ändert. Das erkennt Fälle, in denen z.B. die Zuordnungsnachrichten mit Hinzufügen und Löschen ein und derselben Zuordnung vertauscht am Zielknoten angekommen sind. Die richtige Reihenfolge von Zuordnungsinformationen, wenn ein externes zugeordnetes Gerät seinen Proxy MP wechselt, kann nur erkannt werden, wenn die Sequenznummer SN /ID dem externen, zugeordneten Gerät zugeordnet ist.

Da Sequenznummern den größten Informationsgehalt haben, wenn sie den zugeordneten externen Geräte zugeordnet sind, es aber auch Mechanismen gibt, die keine solche Sequenznummern für die Zuordnungen benötigen, wird in der Erfindung vorgeschlagen, für das Vorhandensein von für die zugeordneten externen Geräte spezifischen Sequenznummern ein entsprechendes Informationselement einzufügen.

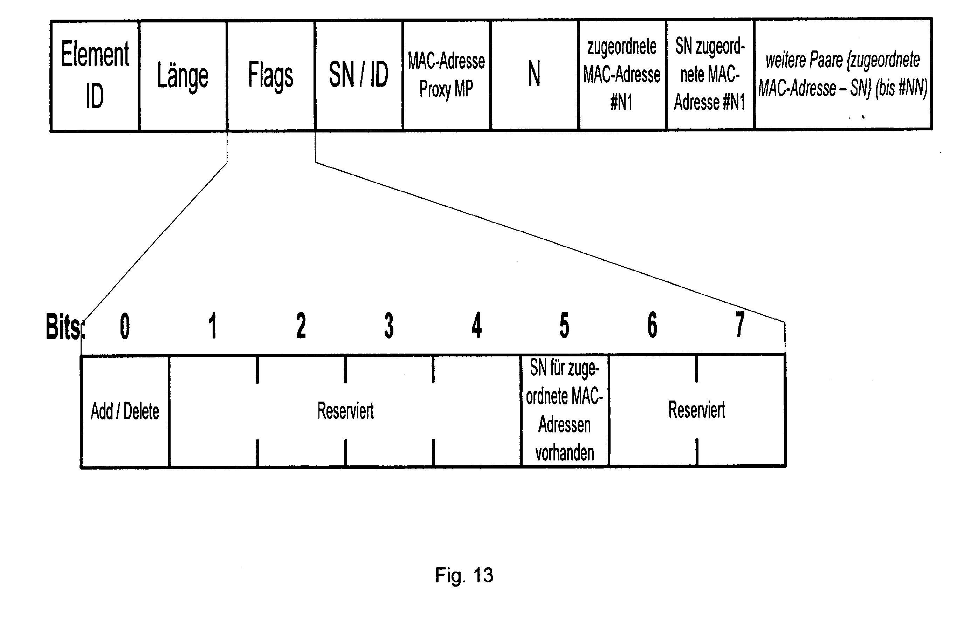

In einer ersten Ausführung wird dieses Informationsfeld nur einmal in die Zuordnungsnachricht eingefügt. Es gilt dann für alle aufgeführten Zuordnungen. Ein Beispiel dafür ist in Fig. 13 angegeben, die eine Zuordnungsnachricht zeigt, die mit Sequenznummern der zugeordneten MAC-Adressen erweitert ist. Ein entsprechend gesetztes Bit 5 im Flags-Feld, z.B. auf den Wert 1, bedeutet, dass zu jeder Zuordnung auch die entsprechende Sequenznummer SN /ID des zugeordneten Gerätes mit angegeben wird.

Es kann aber auch sein, dass für einige Zuordnungen keine Sequenznummer SN /ID übermittel wird, für andere aber doch. Dann muss das Informationsfeld für das Vorhandensein der Sequenznummer SN /ID für jede Zuordnung separat angegeben werden. Vorteilhafterweise sollte es über ein Informationsfeld möglich sein, festzulegen, ob das Informationsfeld für das Vorhandensein der Sequenznummer SN /ID nur einmal für alle Zuordnungen oder für jede Zuordnung separat angegeben wird.

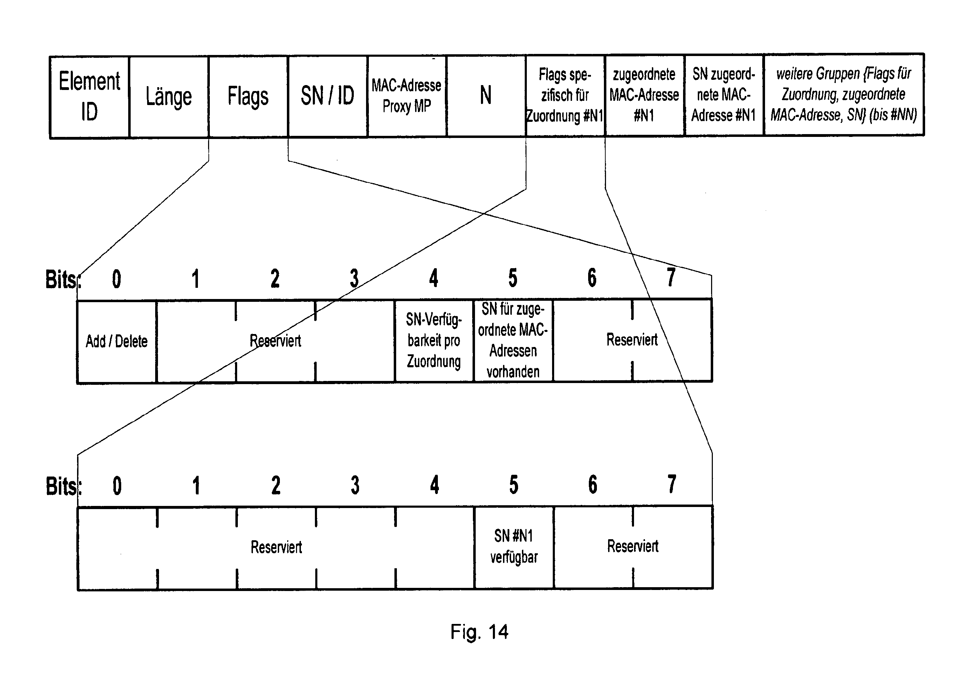

Da der technisch notwendige Bereich für ein Informationsfeld in der Regel deutlich größer ist als der tatsächliche Bedarf des Informationsfeldes (1 Byte = 8 bit zu 1 oder 2 bit), kann der Bereich für das Informationsfeld, welches bestimmt, welches Verfahren für die Bestimmung der Gültigkeit der Zuordnungsinformation verwendet wird, auch für des Informationsfeld über das Vorhandensein der Sequenznummer SN /ID genutzt werden. Über die entsprechende, festgelegte absolute (Bit)-Position können die beiden Informationsfelder unterschieden werden. Ein Beispiel für die separate Angabe von Sequenznummern ist in Fig. 14 angegeben, die eine Zuordnungsnachricht zeigt, die mit Sequenznummern für zugeordnete MAC-Adressen mit separater Festlegung der Verfügbarkeit der Sequenznummer SN /ID pro Zuordnung erweitert ist. Ein entsprechend gesetztes Bit 4 im allgemeinen Flags-Feld, z.B. auf den Wert 1, bedeutet, dass zu jeder Zuordnung ein separates Flags-Feld existiert, in dem sich die Information, ob die Zuordnung eine Sequenznummer SN /ID hat, befindet. Das wird in einem entsprechend gesetzten Bit 5, z.B. auf den Wert 1, bestimmt.

### Kombination aller Erweiterungen:

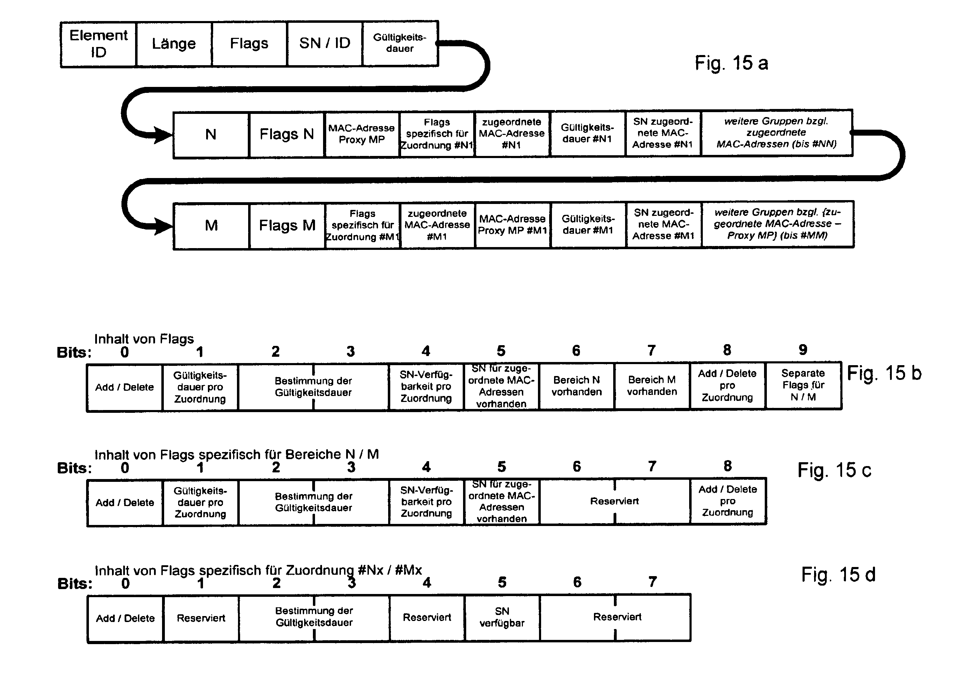

Die in der Erfindung vorgeschlagenen Erweiterungen können separat oder auch zusammen umgesetzt werden. Fig. 15 zeigt beispielhaft die Struktur einer Zuordnungsnachricht mit einer Kombination aller beschriebenen Erweiterungen, die die größte Flexibilität ermöglicht, wodurch ein Maximum an vorgeschlagenen Erweiterungen möglich ist.

Die Erfindung beschreibt Erweiterungen von Zuordnungsnachrichten, insbesondere der Zuordnungsnachricht aus dem IEEE 802.11 s Draft Standard 2.0 (Abschnitt 7.3.2.99). Hiermit ist es möglich, die jeweilige Zuordnungsnachricht in möglichst vielen Routing-Protokollen bei Bedarf verwenden zu können. Dies betrifft insbesondere die Gültigkeitsdauer von Zuordnungsinformationen, die Menge der darstellbaren Zuordnungen und Sequenznummern.

Die in der Erfindung beschriebene Struktur der Zuordnungsnachricht und die da-mit verbundenen Mechanismen ermöglichen es, eine Vielzahl von Kombinationen von Zuordnung, Gültigkeitsdauer und Sequenznummer SN /ID darzustellen, wodurch eine hohe Flexibilität und Einsetzbarkeit der Zuordnungsnachricht erreicht wird.

Mit einer weniger allgemeinen Struktur der Zuordnungsnachricht kann es notwendig sein, mehrere Zuordnungen in mehreren Zuordnungsnachrichten schicken zu müssen, da es nicht möglich ist, sie in eine Zuordnungsnachricht korrekt abzubilden. Es kann sogar soweit gehen, dass manche Zuordnungen aufgrund der eingeschränkten Struktur der Zuordnungsnachricht gar nicht übermittelt werden können. Mit der Erfindung können sehr viele verschiedene Zuordnungen in ein und derselben Zuordnungsnachricht realisiert und übermittelt werden. Das vermeidet Overhead, insbesondere die erhöhte Anzahl von Zugriffen auf die Luftschnittstelle, und spart dadurch Übertragungsbandbreite ein.

Durch die vorgeschlagenen Informationsfelder kann die Struktur einer jeweiligen Zuordnungsnachricht so gesteuert werden, dass möglichst wenig redundante Information enthalten ist. Das verringert die Anzahl der zu übertragenden Datenmenge.

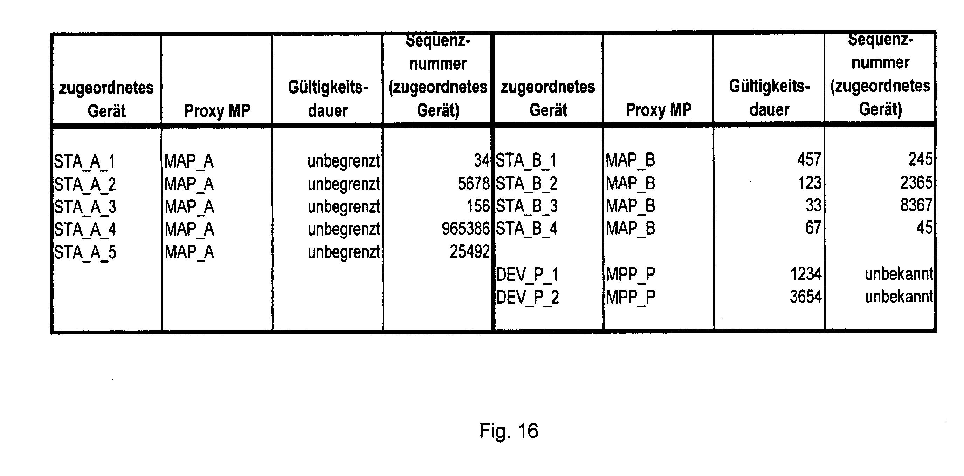

Als Ausführungsbeispiel wird ein Mesh-Knoten MAP_A mit den in Fig. 16 als Tabelle aufgelisteten Zuordnungen des Mesh-Knotens MAP_A betrachtet. Der Mesh-Knoten MAP_A ist ein Mesh-Zugangspunkt. Über ihn verbinden sich Endgeräte mit dem Mesh-Netz. Der Mesh-Zugangspunkt MAP_A ist der Proxy MP für diese Endgeräte. Im Ausführungsbeispiel haben sich fünf Endgeräte STA_A_1, ..., STA_A_5 mit ihm verbunden. Weiterhin kennt der Mesh-Knoten MAP_A einige Zuordnungen, in denen andere Mesh-Knoten die entsprechenden Proxy-MPs sind. Im Ausführungsbeispiel sind dies die folgenden sechs Zuordnungen:
- vier Zuordnungen gehören zu einem weiteren Mesh-Zugangspunkt MAP B und sind die vier mit dem Mesh-Zugangspunkt MAP B verbundenen Endgeräte STA_B_1, ... , STA_B_4. und
- zwei Zuordnungen gehören zu dem Mesh-Knoten MPP_P, der als Portal der Proxy MP für die zwei über ein drahtgebundenes LAN-Netz verbundenen Geräte DEV_P_1 und DEV_P_2 ist.

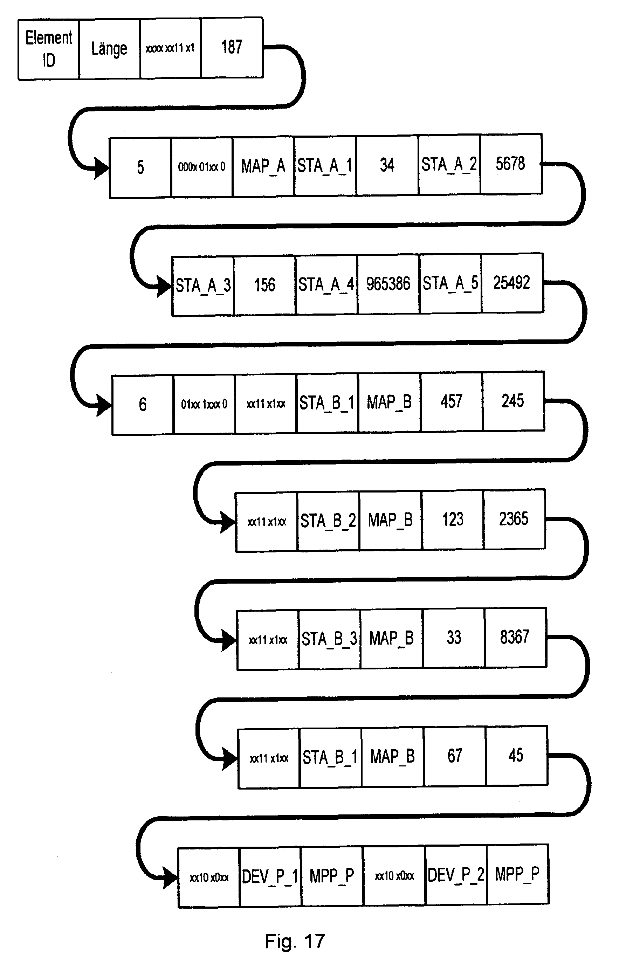

Im Ausführungsbeispiel möchte der Mesh-Knoten MAP_A seine gesamte Zuordnungstabelle einem anderem Mesh-Knoten MP C im Mesh-Netz mitteilen. Die Gültigkeitsdauer für die Zuordnungen mit MAP_A als Proxy MP sollen nach dem Hard-State-Verfahren im Mesh-Knoten MAP_C gesetzt werden. Die Gültigkeitsdauer für die Zuordnungen mit MPP_P als Proxy MP soll von dem Zielknoten MAP_C gesetzt werden. Dazu generiert der Mesh-Knoten MAP_A genau eine Zuordnungsnachricht mit gesamter Zuordnungstabelle des Mesh-Knotens MAP_A entsprechend der Erfindung, die in Fig. 17 dargestellt ist. Ihre Struktur basiert auf der aus Fig. 15.

Im Ausführungsbeispiel treten am Mesh-Knoten MAP_A die folgenden Änderungen auf:
- Die Endgeräte STA_A_2 und STA_A_3 dissoziieren sich vom Mesh-Zugangspunkt MAP_A.
- Das Endgerät STA_A_6 verbindet sich mit dem Mesh-Zugangspunkt MAP_A.

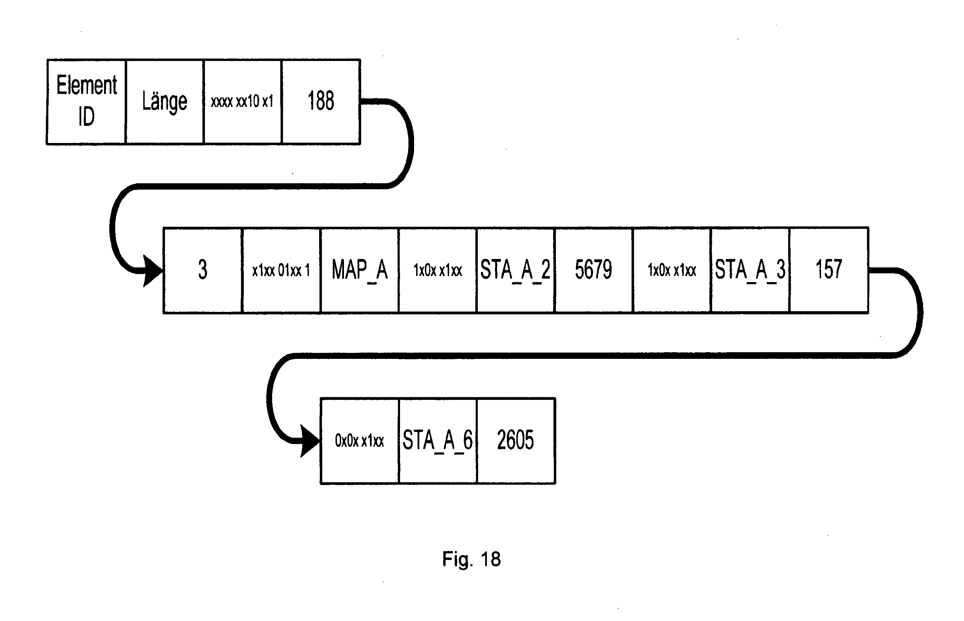

Der Mesh-Zugangspunkt MAP_A möchte diese Änderungen dem Mesh-Knoten MAP_C mitteilen und generiert dazu eine Zuordnungsnachricht mit Veränderungen der Zuordnungstabelle des Mesh-Knotens MAP_A entsprechend der Erfindung, die in Fig. 18 gezeigt ist und deren Struktur auf der aus Fig. 15 basiert.

Die Vorrichtung zum Durchführen des Verfahrens zu Erstellen zumindest einer der Erweiterungen der Zuordnungsnachricht kann in Software, Hardware oder in einer Kombination aus Soft- und Hardware realisiert und betrieben werden. Einzelne Verfahrensschritte werden dabei durch spezifische Einheiten der Vorrichtung umgesetzt.

Die Erfindung kann auf jede Form von Mesh-Netzen angewandt, jedoch vorzugsweise auf WLAN-Netze, wobei vorzugsweise zumindest die innenliegenden Netzknoten untereinander über Funk verbunden sind. Die zu den Randknoten zugeordneten disjunkten Stationen sind in Bezug auf das Mesh-Netz externe Stationen, die auch über Funk mit Randknoten verbunden sein können.

## Patentansprüche

1. Verfahren zum Betreiben eines Mesh-Netzes, insbesondere gemäß dem Standard IEEE 802.11s,
a) wobei das Mesh-Netz aus einer Vielzahl von Netzknoten gebildet wird, die außenliegende Randknoten (M1,M2, M3, M4; MAP_A, MAP_B, ..., MAP_G) und innen liegende Netzknoten (L1, L2; M_H, M_I) umfassen,
b) wobei zumindest ein erster Randknoten (MAP_A) einen Anschlusspunkt für zu dem Netz disjunkte erste Stationen (STA_A_1, STA_A_2, STA_A_3, STA_ A_4_{;} STA_A_5) und zumindest ein zweiter Randknoten (MAP_B) einen Anschlusspunkt für zu dem Netz disjunkte zweite Stationen (STA_B_1, STA_B_2, STA_B_3, STA_B_4) bildet, wobei die ersten und zweiten Stationen in Bezug auf das Mesh-Netz somit externe Stationen sind,
c) wobei zwischen den zu dem Netz disjunkten ersten und zweiten Stationen Datenpakete ausgetauscht werden sollen und
d) wobei bei einem Wechsel einer disjunkten Station von einem Randknoten zu einem anderen Randknoten, insbesondere von einem Funkversorgungsbereich des ersten Randknotens (MAP_A) zum Funkversorgungsbereich des zweiten Netzknotens (MAP_B), eine Aktualisierung der jeweiligen Zuordnungsinformation der Netzknoten mittels einer Zuordnungsnachricht unter Einfügung einer Gültigkeitsdauer für die Zuordnung der an den Randknoten (MAP_A bis MAP_G) jeweils angeschlossenen disjunkten Stationen erfolgt, **dadurch gekennzeichnet,**
e) **dass** die Gültigkeitsdauer durch einzelne Bits eines Flags-Feldes bestimmt wird, wobei wahlweise sowohl eine Hard-State-Zuordnung, bei der die Zuordnungsinformation jeweils explizit gelöscht wird, als auch eine Soft-State-Zuordnung gewählt werden kann, bei der entweder die Quelle oder das Ziel der Zuordnungsnachricht die Gültigkeitsdauer bestimmt (Fig. 5).

2. Verfahren nach Anspruch 1, **dadurch gekennzeichnet, dass** die Gültigkeitsdauer für alle in einer Zuordnungsnachricht für einen Randknoten enthaltenen N Zuordnungen durch einzelne Bits des Flags-Feldes bestimmt wird, wobei jede Zuordnung für eine der N zugeordneten Adressen, vorzugsweise die MAC-Adressen, der Stationen gültig ist (Fig. 5).

3. Verfahren nach Anspruch 1 und 2, **dadurch gekennzeichnet, dass** für jeden zugeordneten Knoten eine eigene Zuordnungsinformation mit einer eigenen Gültigkeitsdauer vorhanden sein kann, wobei jede Gültigkeitsdauer einer Zuordnung durch einen zugeordneten Wert, vorzugsweise durch ein Bit, in einem zusätzlichem Flags-Feld bestimmt wird, ob diese jeweils vorhanden ist oder nicht (Fig. 6).

4. Verfahren nach Anspruch 1 und 2, **dadurch gekennzeichnet, dass** die Gültigkeitsdauer für in ein und derselben Zuordnungsnachricht enthaltene Zuordnungen beliebiger Randknoten durch separate Werte, vorzugsweise einzelne Bits, des Flags-Feldes bestimmt wird, wobei die Anzahl der Zuordnungen durch einen Wert M angegeben ist (Fig. 7).

5. Verfahren nach Anspruch 1, 2 und 4, **dadurch gekennzeichnet, dass** die Gültigkeitsdauer sowohl für alle in einer Zuordnungsnachricht für einen Randknoten enthaltenen N Zuordnungen als auch für alle in einer Zuordnungsnachricht für beliebige andere Randknoten enthaltene M Zuordnungen in ein und derselben Zuordnungsnachricht enthaltene Zuordnungen, durch separate Werte, vorzugsweise durch einzelne Bits, des Flags-Feldes bestimmt wird (Fig. 8).

6. Verfahren nach Anspruch 1 und 5, **dadurch gekennzeichnet, dass** separate Werte des Flags-Feldes, vorzugsweise zwei Bits, angeben, ob sowohl der Bereich mit N Zuordnungen als auch der Bereich mit M Zuordnungen in der Zuordnungsnachricht jeweils vorhanden ist oder nicht (Fig. 9).

7. Verfahren nach Anspruch 1 und 6, **dadurch gekennzeichnet, dass** eine Gültigkeitsdauer sowohl für den Bereich mit N Zuordnungen als auch eine zusätzliche Gültigkeitsdauer für den Bereich mit M Zuordnungen mit jeweils separaten zusätzlichen Flags-Feldern in der Zuordnungsnachricht jeweils vorhanden ist (Fig. 10).

8. Verfahren nach Anspruch 1, 6 und 7, **dadurch gekennzeichnet, dass** ein weiteres zusätzliches Flags-Feld in der Zuordnungsnachricht vorhanden ist, das festlegt, ob sowohl ein zusätzliches Flags-Feld für den Bereich mit N Zuordnungen als auch für den Bereich mit M Zuordnungen in der Zuordnungsnachricht vorhanden ist (Fig. 11).

9. Verfahren nach Anspruch 1 und einem oder mehreren der vorausgehenden Ansprüche, **dadurch gekennzeichnet, dass** die Zuordnungsnachricht in einem Bereich des Flags-Feldes ein Informationsfeld aufweist, welches steuert, ob ein Informationsfeld "add/delete" für alle Zuordnungen gilt oder ob es für jede Zuordnung ein separates Informationsfeld "add/delete" gibt, wodurch jeweils mit einer Zuordnungsnachricht Zuordnungsinformationen sowohl hinzugefügt als auch gelöscht werden können (Fig. 12).

10. Verfahren nach Anspruch 1 und einem oder mehreren der vorausgehenden Ansprüche, **dadurch gekennzeichnet, dass** die Zuordnungsnachricht ein weiteres zusätzliches Informationsfeld enthält, vorzugsweise ein Bit, das festlegt, ob die Zuordnungen die Sequenznummer einer zugeordneten externen Station aufweisen (Fig. 13).

11. Verfahren nach Anspruch 1 und 10, **dadurch gekennzeichnet, dass** ein Informationsfeld der Zuordnungsnachricht einen Wert, vorzugsweise ein Bit, enthält, aufgrund dessen das Vorhandensein der Sequenznummer für jede Zuordnung separat gesteuert werden soll (Fig. 14, Fig. 15).

12. Vorrichtung zur Durchführung des Verfahrens nach Anspruch 1 bzw. nach einem der Verfahren nach einem oder mehreren der Ansprüche 2-11 zum Betreiben eines Mesh-Netzes, insbesondere gemäß dem Standard IEEE 802.11s,
a) wobei das Mesh-Netz aus einer Vielzahl von Netzknoten gebildet wird, die außenliegende Randknoten (M1,M2, M3, M4; MAP_A, MAP_B, ..., MAP_G) und innen liegende Netzknoten (L1, L2; M_H, M_I) umfassen,
b) wobei zumindest ein erster Randknoten (MAP_A) einen Anschlusspunkt für zu dem Netz disjunkte erste Stationen (STA_A_1, STA_A_2, STA_A_3, STA_A_4, STA_A_5) und zumindest ein zweiter Randknoten (MAP_B) einen Anschlusspunkt für zu dem Netz disjunkte zweite Stationen (STA_B_1, STA_B_2, STA_8_3, STA_B_4) bildet, wobei die ersten und zweiten Stationen in Bezug auf das Mesh-Netz somit externe Stationen sind,
c) wobei die Vorrichtung ein Steuergerät aufweist, welches Zuordnungsnachrichten zur Steuerung der Netzknoten erzeugt, um Datenpakete zwischen den zu dem Netz disjunkten ersten und zweiten Stationen zu transportieren und
d) wobei bei einem Wechsel einer disjunkten Station von einem Randknoten zu einem anderen Randknoten, insbesondere von einem Funkversorgungsbereich des ersten Randknotens (MAP_A) zum Funkversorgungsbereich des zweiten Netzknotens MAP_B), durch das Steuergerät eine Aktualisierung der jeweiligen Zuordnungsinformation der Netzknoten mittels der Zuordnungsnachricht unter Einfügung einer Gültigkeitsdauer für die Zuordnung der an den Randknoten (MAP_A bis MAP_G) jeweils angeschlossenen disjunkten Stationen erfolgt, **dadurch gekennzeichnet,**
e) **dass** die Gültigkeitsdauer durch einzelne Bits eines Flags-Feldes bestimmt wird, wobei wahlweise sowohl eine Hard-State-Zuordnung, bei der die Zuordnungsinformation jeweils explizit gelöscht wird, als auch eine Soft-State-Zuordnung gewählt werden kann, bei der entweder die Quelle oder das Ziel der Zordnungsnachricht die Gültigkeitsdauer bestimmt (Fig. 5).

## Claims

1. A method for operating a mesh network, especially according to IEEE standard 802.11s,
a) in which the mesh network is formed from a plurality of network nodes which comprise outer edge nodes (M1,M2, M3, M4; MAP_A, MAP_B, .....,MAP G) and inner network nodes (L1, L2; M_H, M_I),
b) in which at least one first edge node (MAP_A) forms a connection point for first stations disjunctive to the network (STA_A_1, STA_A_2, STA_A_3, STA_A_4, STA_A_5) and at least one second edge node (MAP_B) forms a connection point for second stations disjunctive to the network (STA_B_1, STA_B_2, STA_B_3, STA_B_4), the first and second stations thus being external stations relative to the mesh network,
c) in which data packets are to be exchanged between the first and second stations disjunctive to the network, and
d) in which in the event of a switch of a disjunctive station from one edge node to another edge node, and in particular from a coverage region of the first edge node (MAP_ A) to the coverage region of the second network node (MAP_B), the respective association information of the network nodes is updated by means of an association message while inserting a validity duration for the association of the disjunctive stations connected to the edge nodes (MAP_A to MAP_G), wherein
e) the validity duration is determined by individual bits of a flags field, it being possible to optionally select both a hard-state association in which the association information is explicitly deleted, as well as a soft-state association in which either the source or the target of the association message determines the validity duration (Fig. 5).

2. The method of claim 1 wherein the validity duration for all N associations contained in an association message for an edge node is determined by individual bits of the flags field, each association being valid for one of the N associated addresses, preferably the MAC addresses of the stations (Fig. 5).

3. The method of claims 1 and 2 wherein a dedicated association information having its own validity duration can be present for each associated node, each validity duration of an association being determined by an associated value, preferably by a bit, in an additional flags field, whether this is present or not (Fig. 6).

4. The method of claims 1 and 2 wherein the validity duration for associations of any edge nodes contained in one and the same association message is determined by separate values, preferably individual bits, of the flags field, the number of the associations being given by a value M (Fig. 7).

5. The method of claims 1, 2 and 4 wherein the validity duration both for all N associations contained in an association message for one edge node as well as for all M associations contained in an association message for any other edge nodes associations contained in one and the same association message [*sic*] is determined by separate values, preferably by individual bits, of the flags field (Fig. 8).

6. The method of claims 1 and 5 wherein separate values of the flags field, preferably two bits, indicate whether both the region with N associations and the region with M associations is present in the association message or not (Fig. 9).

7. The method of claims 1 and 6 wherein a validity duration is present in the association message both for the region with N associations and an additional validity duration for the region with M associations, each with separate additional flags fields (Fig. 10).

8. The method of claims 1, 6 and 7 wherein a further additional flags field is present in the association message and determines whether both an additional flags field for the region with N associations and for the region with M associations is present in the association message (Fig. 11).

9. The method of claim 1 and of any one or more of the preceding claims wherein the association message in a region of the flags field exhibits an information field that controls whether an "add/delete" information field is valid for all associations or whether there is a separate "add/delete" information field for each association, whereby association information can be both added and deleted with an association message (Fig. 12).

10. The method of claim 1 and of any one or more of the preceding claims wherein the association message contains a further additional information field, preferably a bit, which determines whether the associations exhibit the sequence number of an associated external station (Fig. 13).

11. The method of claims 1 and 10 wherein an information field of the association message contains a value, preferably a bit, on the basis whereof the presence of the sequence number will be controlled separately for each association (Fig. 14, Fig. 15).

12. A device for carrying out the method of claim 1 or according to one of the methods according to any one or more of claims 2-11 for operating a mesh network, especially according to IEEE standard 802.11s,
a) in which the mesh network is formed from a plurality of network nodes which comprise outer edge nodes (M1,M2, M3, M4; MAP_A, MAP_B, .....,MAP_G) and inner network nodes (L1, L2; M_H, M_I),
b) in which at least one first edge node (MAP_A) forms a connection point for first stations disjunctive to the network (STA_A_1, STA_A_2, STA_A_3, STA_A_4, STA_A_5) and at least one second edge node (MAP_B) forms a connection point for second stations disjunctive to the network (STA_B_1, STA_B_2, STA_B_3, STA_B_4), the first and second stations thus being external stations relative to the mesh network,
c) in which the device exhibits a control unit which generates association messages for the controlling of the network nodes in order to transport data packets between the first and second stations disjunctive to the network, and
d) in which in the event of a switch of a disjunctive station from one edge node to another edge node, and in particular from a coverage region of the first edge node (MAP_A) to the coverage region of the second network node (MAP_B), the respective association information of the network nodes is updated by the control unit by means of an association message while inserting a validity duration for the association of the disjunctive stations connected to the edge nodes (MAP_A to MAP_G), wherein
e) the validity duration is determined by individual bits of a flags field, it being possible to optionally select both a hard-state association in which the association information is explicitly deleted, as well as a soft-state association in which either the source or the target of the association message determines the validity duration (Fig. 5).

## Revendications

1. Procédé d'exploitation d'un réseau maillé, en particulier selon le standard IEEE 802.11s,
a) le réseau maillé étant formé d'une pluralité de noeuds de réseau qui comprennent des noeuds d'extrémité situés à la périphérie (M1, M2, M3, M4; MAP_A, MAP_B, ... , MAP_G) et des noeuds de réseau situés à l'intérieur (L1, L2; M_H, M_I),
b) au moins un premier noeud d'extrémité (MAP_A) formant un point de raccordement pour des premières stations (STA_A_1, STA_A_2, STA_A_3, STA_A_4; STA_A_5) disjointes du réseau et au moins un deuxième noeud d'extrémité (MAP_B) formant un point de raccordement pour des deuxièmes stations (STA_B_1, STA_B_2, STA_B_3, STA_B_4) disjointes du réseau, les premières et deuxièmes stations étant ainsi des stations externes en ce qui concerne le réseau maillé,
c) des paquets de données devant être échangés entre les premières et deuxièmes stations disjointes du réseau et
d) en cas de changement d'une station disjointe d'un noeud d'extrémité à un autre noeud d'extrémité, en particulier d'une zone de couverture radio du premier noeud d'extrémité (MAP_A) à la zone de couverture radio du deuxième noeud de réseau (MAP_B), une actualisation de l'information d'attribution respective des noeuds de réseau ayant lieu au moyen d'un message d'attribution grâce à l'insertion d'une durée de validité pour l'attribution des stations disjointes raccordées respectivement aux noeuds d'extrémité (MAP_A à MAP_G), **caractérisé en ce que**
e) la durée de validité est déterminée par des bits individuels d'un champ de drapeaux, aussi bien une attribution inconditionnelle, avec laquelle l'information d'attribution est à chaque fois explicitement supprimée, qu'une attribution conditionnelle, avec laquelle la source ou la cible du message d'attribution détermine la durée de validité, pouvant être choisie sélectivement (Fig. 5).

2. Procédé selon la revendication 1, **caractérisé en ce que** la durée de validité pour toutes les attributions contenues dans un message d'attribution pour un noeud d'extrémité est déterminée par des bits individuels du champ de drapeaux, chaque attribution étant valable pour une des N adresses attribuées, de préférence les adresses MAC, des stations (Fig. 5).

3. Procédé selon la revendication 1 et 2, **caractérisé en ce qu'**une information d'attribution particulière avec une durée de validité particulière peut être présente pour chaque noeud attribué, chaque durée de validité d'une attribution étant déterminée par une valeur attribuée, de préférence par un bit, dans un champ de drapeaux supplémentaire si cette durée de validité est respectivement présente ou non (Fig. 6).

4. Procédé selon l'une quelconque des revendications 1 et 2, **caractérisé en ce que** la durée de validité pour des attributions de noeuds d'extrémité quelconques contenues dans un seul et même message d'attribution est déterminée par des valeurs distinctes, de préférence des bits individuels, du champ de drapeaux, le nombre des attributions étant indiqué par une valeur M (Fig. 7).

5. Procédé selon l'une quelconque des revendications 1, 2 et 4, **caractérisé en ce que** la durée de validité aussi bien pour toutes les N attributions contenues dans un message d'attribution pour un noeud d'extrémité que pour toutes les M attributions contenues dans un message d'attribution pour d'autres noeuds d'extrémité quelconques, des attributions contenues dans un seul et même message d'attribution, est déterminée par des valeurs distinctes, de préférence par des bits individuels, du champ de drapeaux (Fig. 8).

6. Procédé selon les revendications 1 et 5, **caractérisé en ce que** des valeurs distinctes du champ de drapeaux, de préférence deux bits, indiquent si aussi bien la zone avec N attributions que la zone avec M attributions sont respectivement présentes ou non dans le message d'attribution (Fig. 9).

7. Procédé selon les revendications 1 et 6, **caractérisé en ce qu'**aussi bien une durée de validité pour la zone avec N attributions qu'une durée de validité supplémentaire pour M attributions avec respectivement des champs de drapeaux supplémentaires distincts sont présentes respectivement dans le message d'attribution (Fig. 10).

8. Procédé selon les revendications 1, 6 et 7, **caractérisé en ce que**, dans le message d'attribution, est présent un autre champ de drapeaux supplémentaire qui précise si un champ de drapeaux supplémentaire aussi bien pour la zone avec N attributions que pour la zone avec M attributions est présent dans le message d'attribution (Fig. 11).

9. Procédé selon la revendication 1 et une ou plusieurs des revendications précédentes, **caractérisé en ce que** le message d'attribution dans une zone du champ de drapeaux comprend un champ d'information qui commande si un champ d'informations « ajouter/supprimer » est valable pour toutes les attributions ou s'il existe un champ d'informations « ajouter/supprimer » distinct pour chaque attribution, par le biais duquel des informations d'attribution peuvent être respectivement aussi bien ajoutées que supprimées avec un message d'attribution (Fig. 12).

10. Procédé selon la revendication 1 et une ou plusieurs des revendications précédentes, **caractérisé en ce que** le message d'attribution contient un autre champ d'information supplémentaire, de préférence un bit, qui précise si les attributions comprennent le numéro de séquence d'une station externe attribuée (Fig. 13).

11. Procédé selon les revendications 1 et 10, **caractérisé en ce qu'**un champ d'information du message d'attribution contient une valeur, de préférence un bit, en raison de laquelle la présence du numéro de séquence peut être commandée séparément pour chaque l'attribution (Fig. 14, Fig. 15).

12. Dispositif d'exécution du procédé selon la revendication 1 respectivement selon un des procédés selon une ou plusieurs des revendications 2 à 11 servant à exploiter un réseau maillé, en particulier selon le standard IEEE 802.11s,
a) le réseau maillé étant formé d'une pluralité de noeuds de réseau qui comprennent des noeuds d'extrémité situés à la périphérie (M1, M2, M3, M4; MAP_A, MAP_B, ... , MAP_G) et des noeuds de réseau situés à l'intérieur (L1, L2; M_H, M_I),
b) au moins un premier noeud d'extrémité (MAP_A) formant un point de raccordement pour des premières stations (STA_A_1, STA_A_2, STA_A_3, STA_A_4, STA_A_5) disjointes du réseau et au moins un deuxième noeud d'extrémité (MAP_B) formant un point de raccordement pour des deuxièmes stations (STA_B_1, STA_B_2, STA_B_3, STA_B_4) disjointes du réseau, les premières et deuxièmes stations étant ainsi des stations externes en ce qui concerne le réseau maillé,
c) le dispositif comprenant un appareil de commande qui génère des messages d'attribution en vue de la commande des noeuds de réseau afin de transporter des paquets de données entre les premières et deuxièmes stations disjointes du réseau et
d) en cas de changement d'une station disjointe d'un noeud d'extrémité à un autre noeud d'extrémité, en particulier d'une zone de couverture radio du premier noeud d'extrémité (MAP_A) à la zone de couverture radio du deuxième noeud de réseau MAP_B), une actualisation de l'information d'attribution respective des noeuds de réseau au moyen du message d'attribution ayant lieu par le biais de l'appareil de commande grâce à l'insertion d'une durée de validité pour l'attribution des stations disjointes raccordées respectivement aux noeuds d'extrémité (MAP_A à MAP_G), **caractérisé en ce que**,
e) la durée de validité est déterminée par des bits individuels d'un champ de drapeaux, aussi bien une attribution inconditionnelle, avec laquelle l'information d'attribution est à chaque fois explicitement supprimée, qu'une attribution conditionnelle, avec laquelle la source ou la cible du message d'attribution détermine la durée de validité, pouvant être choisie sélectivement (Fig. 5).
